# EUROPEAN PATENT APPLICATION

(11) **EP 3 869 444 A1**
(43) Date of publication of application: **25.08.2021**
(21) Application number: 19874038.3
(22) Date of filing: 18.10.2019
(51) Int. Cl.: G06Q 50/18

(54) **HANDLING MANAGEMENT DEVICE**

(30) Priority: 18.10.2018 JP 2018196418
(71) Applicant: Startbahn, Inc., Tokyo 113-8485 (JP)
(72) Inventor: SHII, Taihei, Tokyo 113-8485 (JP); NARAMURA, Sawako, Tokyo 113-8485 (JP)
(74) Representative: EIP
(86) International application number: PCT/JP2019/041174
(87) International publication number: WO 2020/080537

(57) **Abstract**

A system is provided, with which various information relating to a traded object can be managed efficiently.

An object certification information issuing unit 51 issues, with respect to an object to be distributed, information that relates to certification of the object and includes artwork basic information relating to elements for increasing the value of the object and constraint condition information relating to a constraint condition applied to distribution of the object, as object certification information. A distributor information issuing unit 52 issues, with respect to a distributor, distributor certification information that relates to certification of the distributor and includes provision condition information that relating to a provision condition applied to distribution of the object. A distribution permission unit 53 compares the object certification information with the distributor certification information when the object is to be distributed, and permits distribution in a case where determination has been made that the constraint condition indicated by the constraint condition information matches the provision condition indicated by the provision condition information.

## Description

### Technical Field

The present invention relates to a handling management device.

### Background Art

Artworks such as paintings, architecture, sculptures, and handicrafts have been popular with enthusiasts, and accordingly, solo exhibitions and the like are being held, and trade in artworks is thriving.

However, determining the value of an artwork is difficult. Hence, there exists a technique by which an artist (a creator) can receive evaluations from many people and a consideration corresponding to the evaluation is returned to the artist (see Patent Document 1, for example).

### Citation List

### Patent Document

Patent Document 1: Patent Publication JP-A-2009-048619

### Summary

### Technical Problem

However, the contamination of artwork trading by forgeries is still a serious problem. More specifically, with conventional techniques, including the technique of Patent Document 1, it cannot be said that accurate records relating to whether an artwork in circulation is genuine (i.e., the origin) and through whose hands the artwork has passed up to that point (i.e., the provenance) are undertaken sufficiently, despite such records forming the basis of trust in the art world.

The present invention has been made in consideration of these circumstances, and an object thereof is to provide a system with which various information relating to a traded object can be managed efficiently.

### Solution to Problem

To achieve the object described above, a handling management device according to an aspect of the present invention includes:
object certification information issuing means for issuing, with respect to an object to be distributed, information that relates to certification of the object and includes element information relating to elements for increasing the value of the object and constraint condition information relating to a constraint condition applied to distribution of the object, as object certification information;
handler information issuing means for issuing, with respect to a handler, handler certification information that relates to certification of the handler and includes provision condition information relating to a provision condition applied to handling of the distribution of the object; and
distribution permitting means which, when the object is distributed, compares the object certification information with the handler certification information and permits distribution in a case where determination has been made that the constraint condition indicated by the constraint condition information matches the provision condition indicated by the provision condition information.

### Advantageous Effects of Invention

According to the present invention, it is possible to provide a system with which various information relating to a traded object can be managed efficiently.

### Brief Description of Drawings

Fig. 1 is a view showing an outline of a use environment of a BCN to which a server according to an embodiment of a handing management device of the present invention is applied.
Fig. 2 is a view showing an example of a BCN certificate used in the BCN.
Fig. 3 is a view showing an example of artwork history information constituting the BCN certificate.
Fig. 4 is a view showing an example of artwork ruleset information constituting the BCN certificate.
Fig. 5 is a view showing examples of a BCN certificate and a handler registration form.
Fig. 6 is a view showing an example of a return revenue remittance scheme.
Fig. 7 is a view showing a different example of a return revenue remittance scheme to that of Fig. 6.
Fig. 8 is a view showing examples of primary and secondary sales schemes.
Fig. 9 is a view showing an example of a KYC scheme for blockchain addresses.
Fig. 10 is a view showing an outline of a BCN smart contract.
Fig. 11 is a view showing an example of the architecture of the BCN smart contract.
Fig. 12 is a view showing an example of a mechanism for realizing interoperability using a two-way peg.
Fig. 13 is a view showing a token circulation problem.
Fig. 14 is a view showing an example of cooperation with a fractional ownership project.
Fig. 15 is a view showing an example of the transfer of a contractual relationship when transferring the BCN certificate.
Fig. 16 is a view showing an overall image of BCN services, including examples of primary and secondary sales schemes. Fig. 16 is a view showing a different example to that of Fig. 8.
Fig. 17 is a view relating to a BCN certificate storage wallet creation ID.
Fig. 18 is a view relating to call-up of the BCN certificate storage wallet by a service of another company.
Fig. 19 is a view relating to an infrastructure for various services.
Fig. 20 is a view relating to businesses envisaged by the BCN certificate.
Fig. 21 is a view showing a system configuration of a system for displaying digital art in conjunction with ownership/browsing authority information on the BCN.
Fig. 22 is a view showing a different system configuration to that of Fig. 21.
Fig. 23 is a view relating to a smartphone application and an NFC card.
Fig. 24 is a view relating to display control on a device that operates in conjunction with content ownership on a blockchain.
Fig. 25 is a view relating to a scheme for revising the terms and conditions of an artwork.
Fig. 26 is a view relating to a different scheme for revising the terms and conditions of an artwork to that of Fig. 25.
Fig. 27 is a block diagram showing an example of a hardware configuration of the server according to this embodiment of the handing management device of the present invention.
Fig. 28 is a function block diagram showing an example of a functional configuration of the server shown in Fig. 27.
Fig. 29A is a list of use cases to which the BCN service can be expanded.
Fig. 29B is a different list of use cases to which the BCN service can be expanded to that of Fig. 29A.

### Description of Embodiments

An embodiment of the present invention will be described below using the figures.

In the description of the following embodiment, it is assumed that a traded object is an artwork.

Determining the value of an artwork may be said to include the following problems and so on. To put it another way, various information used to solve these problems is preferably managed after the accuracy and so on of the various information has been guaranteed. A server according to this embodiment is capable of managing this various information.

One of the causes of the contamination of artwork transactions by forgeries is the fact that current transactions are reliant on paper certificates, which are easy to forge and tamper with and for which unified standards and management methods have not been established. A certificate in this case cannot be considered a sufficient certificate. As a result, the origin and provenance of an artwork must be appraised and guaranteed by a specialist in a time-consuming manner at each transaction.

Further, as the monetary value and quantity of artworks to be managed increase, the origins and provenances of the artworks become more complex. In this case, guaranteeing the accuracy of information using traditional methods is even more difficult.

Furthermore, the effects of technological developments cannot be overlooked. Due to technological developments, reproduction technology has improved, with the result that the spread of artworks distributed in a reproducible format has become a big trend. In other words, appropriate technology is also required for managing this trend.

In the light of the background described above, guaranteeing the origin and provenance of an artwork is an urgent problem that must be addressed in order to maintain/improve trust in the art world.

In other words, with only conventional techniques such as that of Patent Document 1 described above, it is impossible to respond to the serious problem of the infiltration of forgeries as the art market, including the current online market, continues to grow, and as a result, not only is it difficult to guarantee the credibility and certify the value of artworks, but managing the copyright ownership of artworks and the like on the secondary market is almost impossible. The reason for this is that systems for managing the origin and provenance of circulating artworks, which form the basis of the credibility of the artworks, are insufficiently maintained.

Guaranteeing the origin and provenance of an artwork not only contributes to faith in the art market based on current systems. For example, a resale rights system, in which a portion of the sale price is returned to the artist every time an artwork is sold on the secondary market, is a current topic of discussion from various viewpoints, but one of the main opposing opinions thereto is the high cost of monitoring transaction records, including the origin and provenance of the artwork.

Likewise with regard to the suggestion of fractional ownership, where the ownership of a certain artwork is split into smaller pieces and these pieces are traded individually, it is necessary to deal with the problem of how to guarantee the origin and provenance of both the subject artwork and the split ownership.

Furthermore, copyright and transaction rules, which, due to management costs, have up to now been difficult to enforce appropriately after secondary distribution, would become much more practical if management were performed in accordance with the origin and provenance records.

In other words, guaranteeing the origin and provenance in this manner could become the foundation on which to establish a new distribution management method that does not yet exist in current systems.

In addition, art (the art world) is based on a unique structure in which the value of a circulating artwork is evaluated in the context of art, and this structure could never be streamlined simply by reducing intermediate transactions. In consideration of this structure, designs have to take into account the incentives of the respective parties for wide use this as a common infrastructure.

Another issue is that standards are not sufficiently unified across crowded platforms. When artworks can only be managed on a specific platform, a reduction in convenience is inevitable, and moreover, there is the danger that due to the crowded coexistence of independent standards, the online art market will become saturated.

Under these current circumstances, essential conditions for spreading the profits of switching to online widely are the ability to appropriately change rule settings and registration information formats relating to origin and provenance in accordance with the incentives of the respective players in the art industry and new technologies that will appear in the future, or in other words upgradeability, and the ability to transfer records between other platforms undertaking similar attempts, or in other words interoperability.

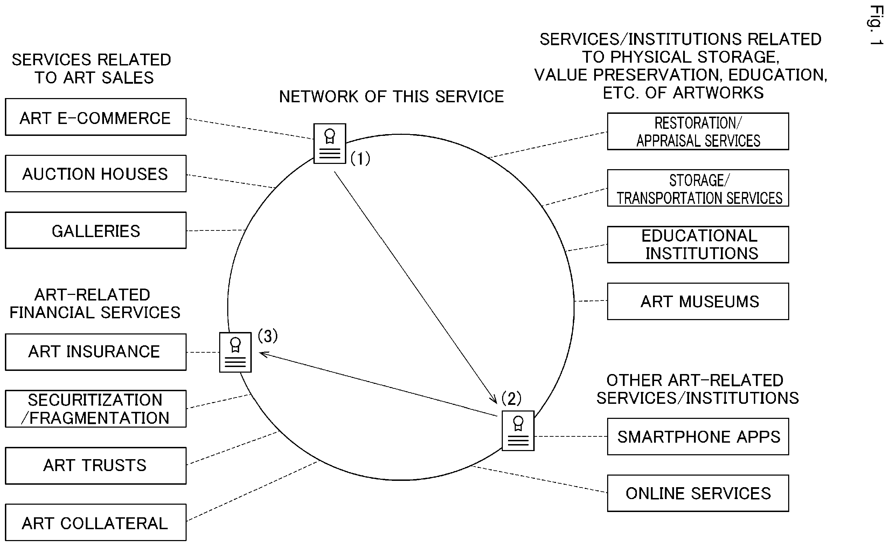

Fig. 1 is a view showing an outline of an environment relating to a BCN to which a server according to an embodiment of a handling management device of the present invention is applied.

Blockchain-related technology is used in the server according to this embodiment of the handling management device of the present invention. Hereafter, a network on which this blockchain-related technology is used will be referred to as a blockchain network (referred to hereafter as a "BCN" as appropriate). Records (blocks) of transactions generated on the BCN are shared, and as a result, correct records can be recorded as blocks on a chain while undergoing mutual verification.

The BCN according to this embodiment is a mechanism in which services related to art sales, services related to the physical storage and value preservation of artworks, education about the artworks, and so on, art-related financial services, and other art-related services share with each other records (blocks) of transactions occurring on their own network and record correct records as blocks on a chain while performing mutual verification. Fig. 1 shows an image in which transaction records are recorded as blocks on a chain from (1) to (2) and from (2) to (3).

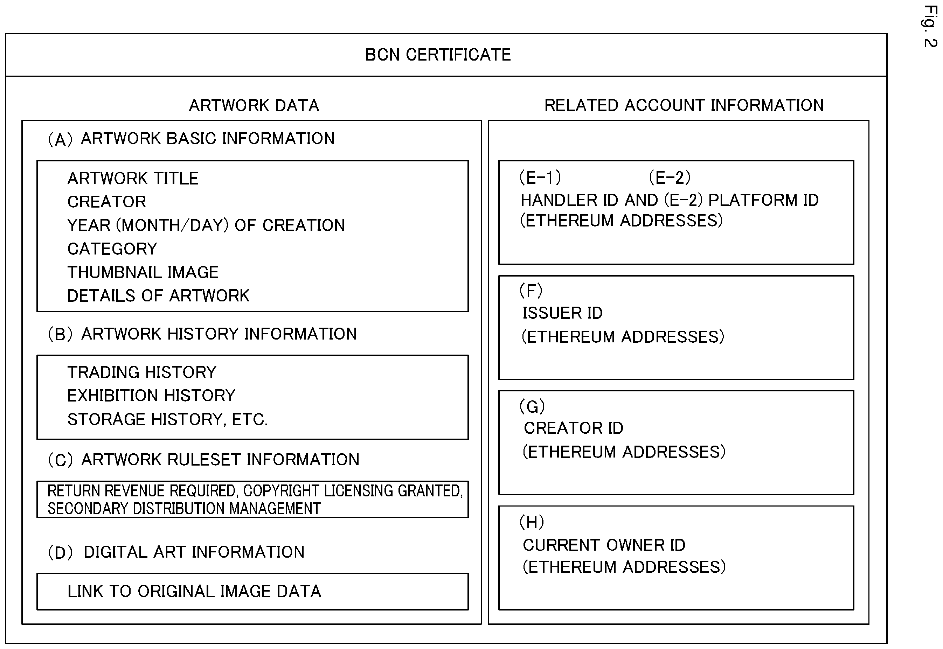

Fig. 2 is a view showing an example of a BCN certificate (an artwork certificate) used on the BCN.

One BCN certificate (artwork certificate) is issued for each artwork registered on the BCN. The content included in the BCN certificate (artwork certificate) can be broadly divided into "artwork data" and "related account information". These will be described in detail below.

The "artwork data" are constituted by (A) artwork basic information, (B) artwork history information, (C) artwork ruleset information, and if necessary, (D) digital art information. The "related account information", meanwhile, is constituted by (E-1) a handler ID, (E-2) a platform ID, (F) an issuer ID, (G) a creator ID, and (H) a current owner ID.

Here, basic information relating to each artwork is recorded in (A) the artwork basic information. Content such as "artwork title", "creator", "year (month, day) of creation", and "technique", which are also recorded on traditional paper certificates, as well as links to data that can be referred to for the purpose of authenticity assessment after the artwork has been listed on the secondary market, such as data relating to the artwork itself at the time of artwork registration (for example, a 2D or 3D image, spectrum data, and other data that are effective in determining authenticity), can be recorded thereon. As a rule, the artwork basic information is information that does not have to be changed after the artwork is circulated, but in exceptional cases, language support or detailed information detailed information added by the creator may be noted additionally thereon.

Next, history information relating to each artwork is recorded in (B) the artwork history information.

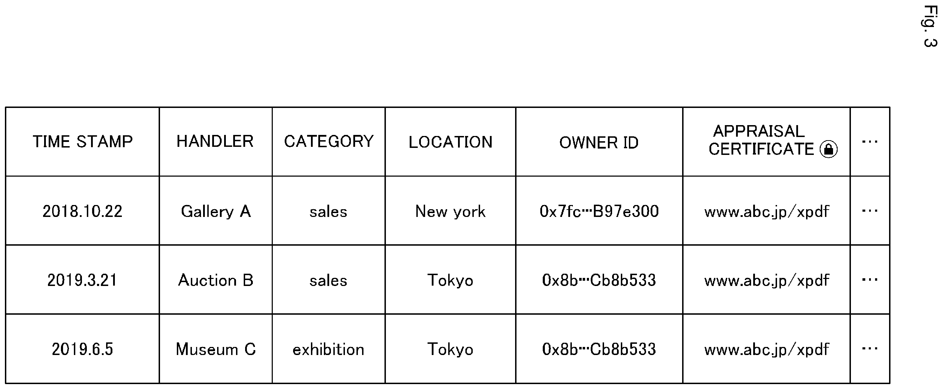

Fig. 3 is a view showing an example of the artwork history information constituting the BCN certificate. The history information is information recorded at the time of a transaction of some type, and the information shown in Fig. 3, such as the time and date of the transaction (a timestamp), the name of the handler and the type of transaction (for example, a category such as primary transaction, secondary transaction, or online transaction), a location, the owner ID, and an appraisal certificate, is written thereon as a sales history.

Further, the history information is not limited to a sales history and also includes an exhibition history, a storage history, records of prizes won by the artwork, restorations, and so on. When the artwork has already been traded on the secondary market or the like such that previous paper certificates, previous history information, and so on exist, this information can be recorded as an electronic file with the link thereto as non-public information.

Furthermore, an arrangement set by the creator (or an agent thereof) in relation to secondary distribution of the artwork and information relating to copyright licensing granted to the owner of the artwork can be recorded in (C) the artwork ruleset information pertaining to Fig. 2.

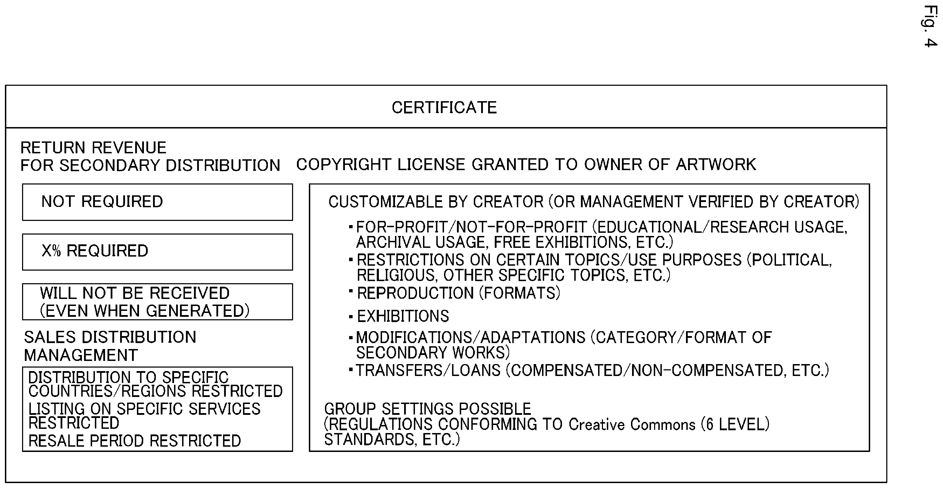

Fig. 4 is a view showing an example of the artwork ruleset information constituting the BCN certificate. Fig. 4 shows examples of terms relating to distribution/copyright management, which can be set in the artwork ruleset.

Specifically, whether or not return revenue is required following secondary distribution, copyright licensing granted to the owner of the artwork, sales distribution management for secondary distribution, and so on are cited.

In addition, in the case of conventional artworks (real art), the legitimate ownership of the artwork is proven by the BCN certificate, but in the case of transactions involving digital art such as, for example, static images, animations, visual artworks that make use of SFX, exhibitions and experience-based artworks (installations) that use spaces and devices, and multimedia artworks that can be viewed on a desktop computer, such as Internet art and CD-ROMs, or in other words as (D) the digital art information pertaining to Fig. 2, ownership on the BCN and access to the data of the artwork itself can be managed by being directly linked online. For example, cooperation between the IPFS (Interplanetary File System), which is a distributed storage mechanism, and the BCN according to this embodiment is also possible. In this case, it is also possible to link to the original image data (not shown).

Meanwhile, Ethereum addresses, for example, of the BCN participants pertaining to the BCN certificate are recorded in the "related account information" shown in Fig. 2, which is constituted by (E-1) the handler ID, (E-2) the platform ID, (F) the issuer ID, (G) the creator ID, and (H) the current owner ID.

An Ethereum address is an address issued for each contract on the blockchain, and on the BCN, a unique address is issued for each handler.

Note that the BCN participants according to this embodiment are the various users who participate in the BCN, and are constituted by the following five types.

(E-1) The handler is the participant who provides various art-related functions in the BCN system provided by the platform. The handler is responsible for transferring artwork certificates, adding history information, and the like on the BCN. A single set of handler registration forms on the BCN, to be described below, is issued to each handler.

More specifically, as shown in Fig. 1, handlers can be broadly divided into operators involved in art sales, operators involved in the provenance of the artwork, such as the physical storage and value preservation of the artwork, education about the artwork, and so on, operators involved in art finance, and other art-related operators.

Operators involves in art sales are operators from art e-commerce, auction houses, galleries, and art dealers.

Further, operators involved in the provenance of the artwork, such as the physical storage and value preservation of the artwork, education about the artwork, and so on, are operators from restoration and appraisal services, storage and transportation services, educational institutions, and art museums.

Furthermore, operators involved in art finance are non-life insurance companies that handle artwork insurance, artwork trust companies, financial institutions that provide art mortgages, and investment-related companies.

Moreover, (E-2) the platform denotes participants who can connect directly to the BCN system and deploy (create) handlers for handling the artworks on the BCN system provided thereby.

Furthermore, (F) the issuer is a user serving as the issuer of the BCN certificate (the artwork certificate). Examples of users who may be issuers include the creator (the artist), an agent commissioned by the creator, various types of handlers, and the owner.

Further, (G) the creator (the artist) is the creator of the artwork and the participant who registers the artwork s/he has created on the BCN according to this embodiment. The creator is the copyright holder of the artwork s/he created, and the creator can set rules relating to copyright licensing and the like on the BCN system. Furthermore, when any return revenue is generated as a result of distribution of the artwork, the creator is the rightful recipient thereof. The creator may be the artist him/herself or an agent (a managing gallery or the like) commissioned by the artist.

In addition, (H) the owner may be either a corporation or an individual and is the participant who owns the artwork by sale or transfer. In the BCN according to this embodiment, the owner is the owner of each artwork. When the creator owns the artwork, the owner and the creator coincide.

The Ethereum addresses of the BCN participants described above are the contract addresses of (E-1) the handlers and (E-2) the platform, or the address of an externally owned account (EOA) used for certificate delivery.

The address of the externally owned account (EOA) includes the addresses of externally owned accounts (EOAs) of the certificate issuer, the creator of the artwork (or the agent thereof), and the owners (from past to present).

The role of the Ethereum addresses of the BCN participants is to manage whom information was recorded by, who is to receive any generated return revenue, usage fees, and so on, and who is allowed to revise (or approve) the rules relating to the artwork.

The content of the BCN certificate was described in detail above. As regards issuance of the BCN certificate, there are two issuance methods, with the BCN certificate ideally being issued on the BCN system by the creator him/herself (or if this is difficult, by an agent directly approved by the creator). In the BCN according to this embodiment, this issuing method is known as "primary issue".

On a BCN certificate issued by primary issue, copyright licensing and rules regarding the receipt of return revenue can be set, and the Ethereum address of the artist can be linked thereto. As a result, the other participants can determine whether or not the credibility of the artwork is high.

The other method involves registering an artwork currently in secondary circulation on the BCN. An artwork in secondary distribution is already owned by the owner serving as the current owner or a distributor. A BCN certificate is issued for an artwork in secondary distribution by the owner or the distributor. In the BCN according to this embodiment, this issuing method is known as "secondary issue".

Note that in secondary issue, authentication by the creator him/herself does not occur, and therefore (C) the artwork ruleset shown in Fig. 2 cannot be set. As a result, it is also impossible to link the BCN certificate with the Ethereum address of the creator.

However, a BCN certificate issued by secondary issue can be converted into a similar BCN certificate to a BCN certificate issued by primary issue by receiving authentication from the creator him/herself at a later date. At this time, the creator (the artist) can set a ruleset for his/her own artwork, but in this case, the approval of the current owner is required.

Secondary issue of BCN certificates reflects current circumstances in the art world of today, in which auction houses issue sales certificates for the purpose of secondary sales and art museums issue collection registration certificates for the purpose of storage. Moreover, as the need for digital archives (registering artworks as digital information so that the artworks are stored forever without deteriorating and providing this information on a network or the like) of the artworks that constitute our cultural heritage becomes ever clearer, having the owners of public artworks, such as art museums, register information about the artworks in bulk aids in preserving art considered to be public property.

Further, secondary issue of BCN certificates provides owners of multiple collections with a new infrastructure for managing information about the artworks.

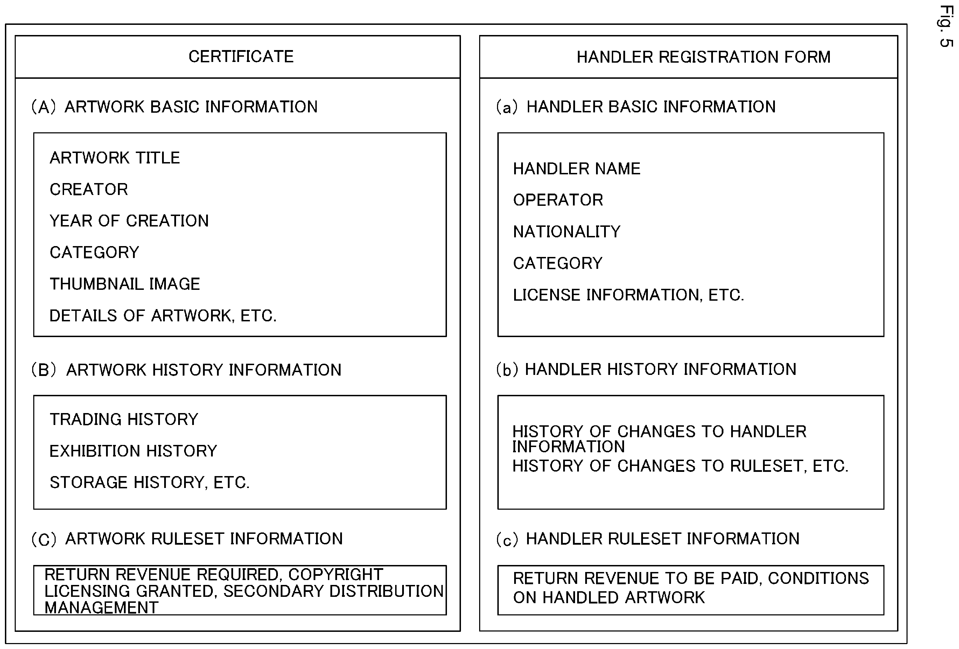

Fig. 5 is a view showing examples of a BCN certificate and a handler registration form. The handler registration form exists as a pair with the BCN certificate, and each handler connected to the BCN according to this embodiment sets/issues the "handler registration form" on the BCN system. The handler registration form serves as registration information about each of the handlers on the BCN, and the role of the handler registration form is to provide the user with basic information relating to the handler, such as the name, operator, location, and nationality of the handler, and at the same time to clarify and operate various operation policies of the handler.

Similarly to the manner in which the creator (the artist) can set the ways in which his/her artwork is to be handled in (C) the artwork ruleset, each handler can determine various conditions required for an artwork handled by (c) a handler ruleset on the handler registration form and determine a policy regarding a setting for return revenue with initiative.

By providing a mechanism for determining whether the content of (c) the handler ruleset information and (C) the artwork ruleset information matches the content recorded respectively on the handler registration form and the BCN certificate, matching that respects the intentions of both the creator (the artist) and the distributor becomes possible.

More specifically, the handler registration form is constituted by (a) handler basic information, (b) handler history information, and (c) the handler ruleset information.

The registration information of each of the handlers on the BCN is recorded in (a) the handler basic information and includes basic information such as the name, location, and operator of the handler.

History information relating to the handler, such as a history of changes to the handler ruleset, is included in (b) the handler history information.

(c) The handler ruleset information is set by the handler and includes information indicating policies (a ruleset) relating to operations and the handling of artworks. For example, a policy for the reception and handling of artworks on the BCN can be clarified on the blockchain separately to the terms of use determined by the handler him/herself. In other words, the ruleset information includes whether or not return revenues will be paid for handling (if so, the proportion of the transaction fee is clarified), conditions required on the certificate of the received artwork, and so on.

By cross-checking the content of the handler registration form with the content of the BCN certificate, namely (A) the artwork basic information, (B) the artwork history information, and (C) the artwork ruleset information, handling of the artwork can be controlled using a smart contract. Here, a smart contract denotes automatic execution of the functions of a contract, and by packaging a smart contract in an Ethereum blockchain, for example, a function for automatically performing execution control corresponding to the terms of the contract is realized.

Next, the functions of the BCN certificate shown in Fig. 5 will be described in detail.

The BCN certificate includes (B) the artwork history information, (C) the artwork ruleset information, and if necessary, (D) the digital art information. Through this information, functions for managing provenance, managing distribution and copyrighting in accordance with the ruleset, cross-referencing to other BCN certificates, and receiving return revenue are realized.

Provenance management is made possible mainly by (B) the artwork history information. Provenance management is extremely important for preventing the circulation of artwork forgeries. Moreover, it is well known that the value of an artwork is determined not only by the authenticity and the creator of the artwork (the artist), but also by the historical route through which the artwork has passed. (B) The artwork history information encompasses the entire value-related history of the artwork, including not only the sales history but also the exhibition, storage, and restoration histories thereof.

This history relating to the artwork is recorded on the BCN. As a result, the history of the artwork, which was previously dispersed across various locations, can be integrated on the BCN, which contributes to guaranteeing the credibility of the artwork and protecting the value of the artwork.

Furthermore, nowadays artworks in secondary distribution are distributed widely, making it difficult even for the creator (the artist) him/herself to ascertain the whereabouts of the artwork. Moreover, missing history information may prove an obstacle when holding a retrospective exhibition of the creator (the artist) or when comprehensively cataloging the works of the creator (the artist) in the Catalogue Raisone (a catalog listing artworks together with information such as the year of production and size thereof). Here, by recording and sharing the artwork history information on the BCN, it is easier to preserve artworks as common assets of humankind in both physical and informational terms.

In addition, the history information is basically recorded in units of the handlers involved in events such as sales, exhibitions, storage, restorations, and management. The history information is not recorded in units of the personal information of the person involved in the transaction, such as the real name and address of the person. Thus, the information of the handler who recorded the history can be written down, making it possible to reflect the brand value and credibility thereof, nurtured over time in the (art) world, on the BCN.

Managing distribution and copyrighting in accordance with a ruleset, in addition to managing ownership of the artwork, on the BCN using related account information is mainly made possible by (C) the artwork ruleset information. Thus, it is possible to manage copyrighting and secondary distribution rules relating to the artwork.

When attempting to gain partial use permission of the copyright of an artwork, it has until now been necessary to create and conclude a contract between the creator (the artist) or a copyright management organization and the owner. In actuality, however, high operational hurdles exist in this series of processes, thereby hindering full utilization of the artwork while protecting the copyright of the creator (the artist). Moreover, it is difficult in actual operational terms to conclude a contract for every obligation or the like relating to sales during secondary distribution of the artwork.

On the BCN, the rules set initially are inherited together with the ownership of the artwork, thereby eliminating the need for the creator (the artist) to conclude a new contract individually with each owner.

This mechanism is advantageous not only for the creator (the artist) but also for the owner or distributor. The creator (the artist) can set the scope of the approval to be granted to the owner in advance. Hence, the owner or distributor of the artwork does not have to contact the creator (the artist) regarding licensing each time, and as a result, the administrative costs of handling the artwork can be reduced.

The automatic contract execution function known as a smart contract is packaged in the Ethereum blockchain used in this example. Hence, with respect to content for which the possibility of execution on the BCN can be determined automatically, execution control can be performed automatically in accordance with the terms of the contract. Examples of the content that can be controlled by a smart contract include determining whether it is possible to register an artwork with a specific handler, control relating to transfer of the BCN certificate, distribution of return revenue based on a contract ratio on the BCN, linking to related certificates for secondary works and editioned works (limited-edition works), and so on.

Meanwhile, regarding contract content related to copyright licensing, in many cases, actual execution control is not only performed online but is also related to the real world.

For example, license agreements for exhibitions, alterations, commodification, and so on relating to a certain artwork correspond thereto. For this contract content, it is not possible to determine whether or not the contract content is actually being followed only on the BCN. However, by clarifying the licensing scope and contract content on the BCN and recording thereon the fact that both parties (the creator and the owner) have confirmed and agreed to the content, as well as the time and date of the agreement, this can be used as a basis when the need for confirmation arises at a later date.

A mechanism for concluding a new contract between the new owner and the creator (the artist) when the ownership of an artwork is transferred and a mechanism by which the creator (the artist) or his/her agent and the current owner revise the rules of the artwork will be described below.

First, the creator of the artwork (the artist) or his/her agent sets information indicating the degree to which the copyright usage license is to be granted to the owner of the artwork on the BCN certificate as the "artwork rules".

Next, the "artwork rules" set by the creator (the artist) are recorded on the BCN, whereupon the ownership of the artwork is transferred during distribution of the artwork, and when the ownership on the BCN certificate is transferred, the right holder of the copyright license is transferred at the same time. At this time, in legal terms, a new licensing contractual relationship is concluded on a one-to-one basis between the creator of the artwork (the artist) and the new owner. Specifically in the fields of digital art and so on, a mechanism allowing specific copyright licenses to be traded independently of the ownership of the artwork can also be included.

Further, when the ownership of the artwork has already been transferred from the creator (the artist) to another owner, the creator (the artist) and the current owner must both agree to update the artwork rules. Specifically, a process by which one party approves a suggestion made by the other party may be considered.

A cross-referencing function (not shown) between BCN certificates is as follows. Relationships to other related BCN certificates may be recorded on the BCN certificate in form enabling cross-referencing. Examples of related BCN certificates include certificates for editioned works of a certain artwork, certificates for public secondary works based on a certain artwork, and so on.

Recording relationships between BCN certificates on the BCN has the following three main benefits.

The first is that since the copyrights of the certificates of a plurality of editioned works should be treated equally, copyright approval can be set and managed collectively in a manner that does not cause contradictions therebetween.

The second is that a secondary work approved by the author of the original artwork can be authenticated and revenue can be shared, including for the original artwork.

Issue limits for editioned works are an extremely important constraint by which creators (artists) ensure the scarcity of their artworks. The third benefit is that it is possible to perform automatic control using a smart contract on the BCN so that linked edition certificates are issued in no more than a fixed number.

The return revenue receipt function is made possible mainly by (C) the artwork ruleset information. A return revenue mechanism is packaged in the BCN as a mechanism for remitting revenue to the creator (the artist) even from secondary distribution. The creator (the artist) can receive return revenue in accordance with the artwork ruleset and the handler ruleset every time an artwork for which a BCN certificate has been issued is traded.

In Europe and some other countries and regions, artist resale rights have already been introduced by law. According to the return revenue mechanism of the BCN, it is possible to realize a return revenue function in the form of a contract based on agreements between the creator (the artist) and each of the handlers handling the artwork.

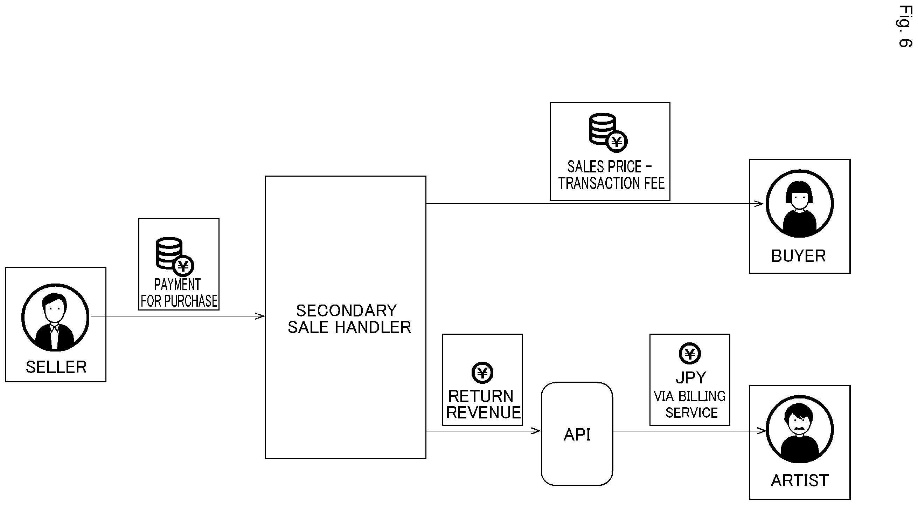

Fig. 6 is a view showing an example of a return revenue remittance scheme. First, Fig. 6 shows a mechanism by which return revenue can be remitted using an API payment service. This corresponds specifically to cases performed off-chain (off the blockchain).

Off-chain (off the blockchain) and on-chain (on the blockchain) remittance functions can be set for payment of return revenue. Off-chain remittance can be realized by introducing the functions of a settlement operator.

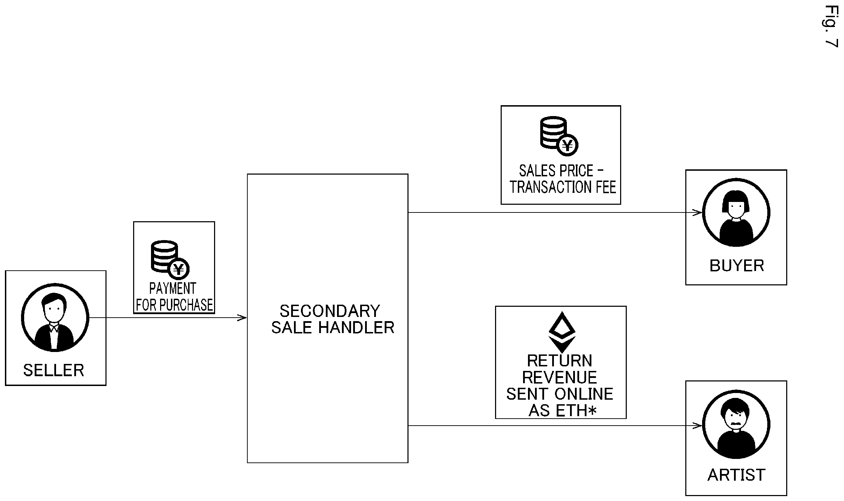

Fig. 7 is a view showing a different example of a return revenue remittance scheme to that of Fig. 6. This corresponds specifically to cases performed on-chain (on the blockchain). On-chain remittance is realized by converting legal currency into, for example, Ether (indicating a virtual currency that is exchanged on Ethereum, referred to here as ETH), stable coins (a virtual currency with a stable price, formed from a combination of legal currencies or the like), or other coins with a stable price.

By constructing the schemes described above, the creator (the artist) can set, in advance on (C) the artwork ruleset on the BCN certificate, "demand return revenue?", "(if so,) at least what percentage of the purchase price of the artwork (excluding related costs such as various taxes, including consumption tax, and shipping fees) to demand?", and so on in relation to the handler handling distribution of the artwork.

The settings relating to return revenue in (C) the artwork ruleset are cross-checked with a "return revenue rate", not shown, which is set in (c) the handler ruleset on the handler registration form set by each handler. A handler who has performed setting for receiving return revenue of at least the proportion demanded by the creator can handle the artwork. In other words, according to this mechanism, only artworks that meet the return revenue rate requirement set by a handler are allowed to be handled by that handler.

There are market concerns that the introduction of a return revenue system may impede distribution. However, the idea of the BCN according to this embodiment is that these concerns can be resolved by providing a mechanism with which the execution of resale rights can be supported in countries and regions where such rights have already been introduced, while in countries and regions where resale rights do not exist, creators (artists) and services can set and match their own policies freely.

The creator (the artist) can perform setting so that a part of the beneficiary rights for artwork return revenue received by him/herself as the creator (the artist) is distributed to another stakeholder, such as an agent (a gallery or the like, for example) that manages the creator (the artist), an exhibition facility or an educational institution, or a supporter of the creator's (the artist's) production activities.

In so doing, it is possible to provide a mechanism for facilitating the implementation of production activities, exhibitions, and so on even in a state where the creator (the artist) does not have abundant funds for current activities, and for sharing the risks and benefits among a plurality of stakeholders.

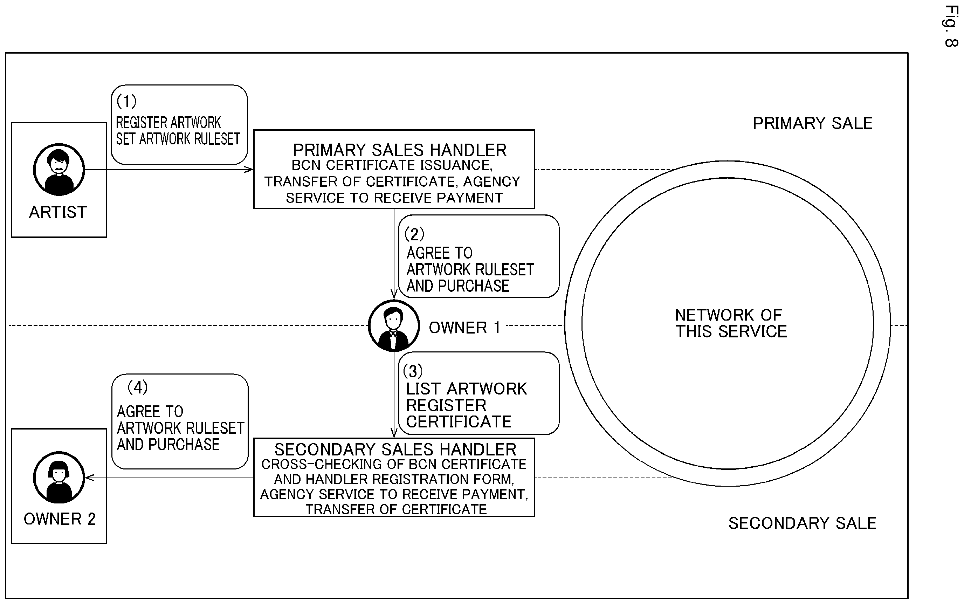

Fig. 8 is a view showing examples of primary and secondary sales schemes. More specifically, Fig. 8 shows a sales flow in a case where primary and secondary sales services are used on the BCN according to this embodiment.

Artwork sales and the like are conducted in a structure where the creator (the artist), the handler, and the owner exist. Note that in addition to trading, there are also use cases involving gifting, storage, and restoration, but here, to simplify the description, trading will be used as an example.

Steps (not shown) in which the creator (the artist) lists an artwork on an online trading service are as follows. Note that here, the trading service is implemented by the handler.

In step 1, the creator (the artist), having agreed to (c) the handler ruleset information, lists the artwork on the trading service and sets (C) the artwork ruleset information.

In step 2, the buyer agrees to the artwork ruleset of the artwork and buys the artwork.

In step 3, the buyer pays the cost of the artwork to the trading service.

In step 4, the BCN certificate is temporarily moved from the creator account on the BCN to the account of the trading service.

In step 5, either the creator (the artist) or the trading service ships the artwork to the buyer.

In step 6, the buyer confirms receiving the artwork, the BCN certificate is transferred from the account of the trading service to the account of the buyer, and a record of the sale on the trading service (the primary sale handler) is added to the history on the BCN certificate.

In step 7, the trading service pays the sale price to the creator (the artist).

The basic flow of a case in which an artwork in secondary distribution is traded between users is the same. When the owner of the artwork lists the artwork on the trading service, this is only possible if (C) the artwork ruleset information and (c) the handler ruleset information match.

Further, at the time of payment, a payment from which a transaction fee and the return revenue have been subtracted is paid to the seller. The return revenue is paid to the creator of the artwork (the artist). The transaction fee is paid to the trading service.

As well as the sales flow described above, transactions may be performed between individuals (not through a handler). In addition to a method of sending BCN certificates between wallets of the individuals, NFC (Near Field Communication) cards may also be used. With this method, transfer of the BCN certificate can be realized by inheriting the NFC card, on which private key information required to access the BCN certificate is partially recorded, together with the artwork.

Next, since the BCN according to this embodiment is not an organization managed and certified by a single manager, it is necessary to guarantee the credibility of the artworks through the blockchain technology itself, which exhibits properties of both transparency and tamper resistance, and the operation thereof, which is centered on consensus building. Here, as a method for guaranteeing the credibility of an artwork, it is necessary to verify that the issuer of the BCN certificate and the handler registration form is not a user or business having malicious intent and that the BCN certificate is linked to the actual work.

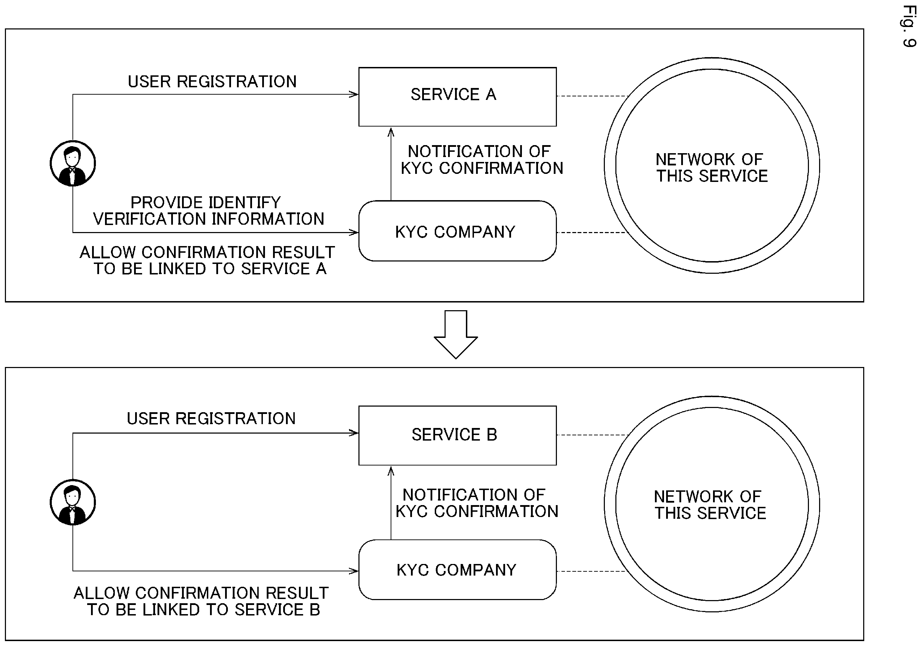

Fig. 9 is a view showing an example of a KYC scheme for blockchain addresses.

As described above, the credibility of the BCN certificate and the provenance can be determined from information indicating who issued the certificate and who registered the provenance. For this purpose, it is important to ascertain how the Ethereum addresses of the various BCN participants are linked to actual individuals or corporations. Credibility can be given to the information indicating who issued the BCN certificate and who registered the provenance by the creator (the artist), an agent approved by the creator, and the handler.

Hence, with regard to the BCN participants, in order to ensure the credibility of the BCN system, actual individuals and corporations must be linked with personalities on Ethereum (through KYC verification of the Ethereum addresses, for example).

KYC verification (personal identification) of the creator (the artist) is basically performed through the handlers, but it is also possible to be verified directly by the entity that operates the BCN. Moreover, a single EOA address can be verified by a plurality of handlers.

Meanwhile, although the personal information of individual users is not published on the Internet, the need for AML (anti-money laundering) during artwork transactions is under more serious consideration, particularly in the EU (the European Union). In these circumstances, blockchain technology can be applied to AML. More specifically, blockchain technology can be applied to AML through cooperation between the BCN and a KYC (personal identification) service for blockchain addresses.

Credibility issues relating to an ecosystem of certificates for artworks include not only the credibility of the BCN certificate itself but also the problem of how to guarantee that the information recorded on the BCN certificate matches the actual artwork. This becomes a problem in cases where a real artwork is switched for a fake artwork, for example when the BCN certificate itself is real but a fake artwork is sold with malicious intent together with the BCN certificate during secondary distribution while the real artwork remains in the hands of the previous owner.

It is difficult to eliminate this risk altogether, but with a BCN, it is possible to deal with this issue by two methods. The first method is to store photographic data of the artwork on a blockchain. The second method is to carry out governance through the BCN operator.

In the first method, the problem of how to accurately store information such as the shape, colors, and materials of the artwork as digital data can be dealt with by storing various photographic data relating to the creator (the artist) on the BCN as a part of the information on the BCN certificate either at the time of or after primary issue of the BCN certificate. Since the date and time of issuance of the BCN certificate on the blockchain are clearly stored as information, the time at which the photographic data of the registered artwork were acquired as photographic information is also clear. The occurrence of a switch is analyzed by cross-checking this information with the real work at a later date.

Further, the format of the photographic data is not limited by the BCN according to this embodiment, and the photographic data may be stored in the most suitable data format for the format of the artwork.

In the second method, it is undeniable that a discrepancy between the owner of the BCN certificate and the owner of the actual artwork may be produced by a malicious user. In this case, the operator of the BCN can take on the role of amending the information and removing the user by carrying out governance.

The BCN (Blockchain Network) according to this embodiment employs a public chain (a public blockchain) known as Ethereum, for example. Further, Ethereum includes a mechanism with which it is possible to build a distributed application on a blockchain using smart contracts.

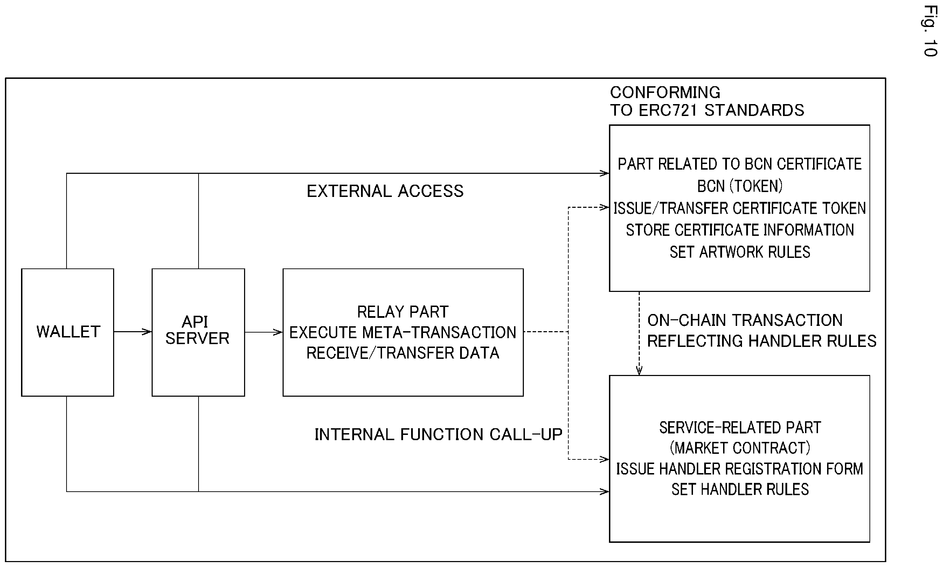

Fig. 10 is a view showing an outline of a BCN smart contract. The smart contract will be described by classifying the smart contract according to function.

In this example, a toolkit known as OpenZeppelin SDK is used in order to emphasize compatibility with other projects.

The contract can be broadly divided into a part relating to the BCN certificate (a BCN token), a part relating to the handler registration form (a market), and a part (a relay part) that serves as an endpoint of a meta-transaction, to be described below.

On the BCN token side, there are functions for issuing or transferring certificate tokens that comply with ERC721, for example. On the market side, meanwhile, the handlers can be contracted and deployed individually by a platform contract, and handler rules can be set so as to be linked respectively to uniquely distinguishable contract addresses. The relay part, which connects these parts, is the endpoint of a meta-transaction performed as a substitute for a user transaction, and this part executes mathematical functions in relation to both the BCN token and the market contract. When ownership of a BCN certificate is transferred or the like, an on-chain transaction that reflects the handler ruleset can be performed through data referencing from the BCN certificate (the BCN token) to the handler (the market).

The BCN certificate uses one of the representative token standards of Ethereum, which is known as ERC721. The BCN certificate is issued on the BCN blockchain according to this embodiment as an NFT (an abbreviation of non-fungible token).

Further, on a code level, the ERC721 library of OpenZeppelin, which is the de facto standard in the Ethereum community, is inherited, and by adding unique control while complying with defined mathematical function names, token operations reflecting the interests of a plurality of stakeholders, including the creator (the artist), the owner, a gallery, and an auction house, becomes possible.

In addition, in conventional web applications, it is possible to access one's own information only through a dedicated application or interface. With this design, however, it is possible for individuals who comply with ERC721 to move their BCN certificates, check ownership lists, and so on through an application such as a typical wallet owned by the individual.

It is assumed that a proxy contract serving as the endpoint will be used permanently, and accordingly, the proxy contract has a fixed address and acts as storage for storing data. On the other hand, the proxy contract only has a minimum required function for forwarding mathematical function execution to an external contract by delegate_call. The set of contracts accessed from the proxy contract hold not only state information such as ownership, but also logic information relating to the operations and rules of the handlers. By providing a structure in which data storage and logic are separated, the contract of the logic part can be redeployed on Ethereum while maintaining the properties of the tamper-resistant blockchain.

Note that this operation can only be performed from a governance contract with the agreement of the participants. For the storage held by the proxy contract to be accessed permanently and continuously, adding functions and responding to unforeseen system malfunctions are made easy, while maintaining access to existing data.

However, data storage on Ethereum is subject to various restrictions. There is a limit to the amount of stack and memory that can be used in a single transaction, and as the amount of data included in the input increases, the GAS (the unit of a single calculation step on Ethereum) fee also increases. To solve this problem, data not used for program calculations and the like of meta-information about an artwork and so on are recorded off-chain, i.e., outside the Ethereum network, and Ethereum is used to store the URLs at which the original data can be viewed and the hash values thereof. Hash values are generated on the basis of the data information and therefore serve to verify tampering following recording to Ethereum.

To register and update information on an Ethereum blockchain, it is necessary to pay a GAS fee (an Ethereum use fee) as an administrative fee to a minor (one of many transaction approvers existing on Ethereum). The GAS fee is paid when registering or updating the information from the Ethereum address at which the transaction was signed, and at present, the GAS fee greatly hinders use of an Ethereum blockchain.

To solve this, the BCN employs a technique known as a meta-transaction, by which the platform side pays the GAS fee on behalf of the user. With this technique, the user can delegate smart contract execution to an account (a platform) having Ether. In other words, the platform can pay the GAS fee on behalf of the user.

Furthermore, aside from the user, it is also necessary to take measures to reduce the GAS fee paid by the platform. To solve this, measures are taken to store the information about the artwork, the provenance, and so on in different locations depending on the application. The provenance information of an artwork can be broadly divided into "necessary information" for calculation formulae used for automatic execution of smart contracts and "unnecessary information (information that is only recorded)". In order to reduce the GAS fee, the former is stored in the storage, while the latter is stored in an event log or off-chain.

Next, in the art world, it is necessary to guarantee the transparency of the provenance information. However, it is not always best to publish all of the information. Depending on the artwork, the requirements for information to be published and information not to be published may differ. Privacy-related information such as the artworks currently owned by the owner and how much the owner paid for the artworks is preferably not published on the blockchain.

However, blockchains were originally designed to distribute and manage data while guaranteeing the transparency of the data, and therefore all nodes store the same data in a viewable form. As an inevitable result, anybody can view the data existing on a typical blockchain network. Hence, by using a blockchain network (the Enigma Protocol, for example) that emphasizes data privacy, it is possible to implement privacy measures.

According to the current Ethereum protocol, the history information on the BCN according to this embodiment is constituted by two parts, namely a public part and a private part. This history information is permanently stored so as to be viewable by anybody by issuing an Ethereum event log.

Meanwhile, three exemplary use cases exist as approaches to the history information that is not to be published. The first is a method by which the user records data on the blockchain after encrypting the data off-chain. Thus, private history information can only be read by those having the key that was used to encrypt the data.

The other two methods are methods fusing on-chain and off-chain approaches. In one of these two methods, only a link to the storage serving as the storage destination of information such as the actual data about the artwork is recorded on the blockchain. In this method, only a link to the storage service serving as the storage destination is recorded on the blockchain. As regards access rights to the storage service serving as the storage destination, individual users can add their own settings off-chain.

In the other method, recording is performed using an ID that cannot be checked by others. For example, when payment is performed using a payment platform provided by a third party, by recording a generated payment ID on the blockchain, the existence of the payment can be proved while preventing the details of the payment from being viewed by third parties.

Next, management of access rights will be described. As noted above, information about the storage and event log on the contract can basically be viewed by anybody. On the other hand, the authority to perform processing such as generating, updating, and deleting data must be granted to a specific individual or corporation. On the BCN, the management of access rights for generating, updating, and deleting can be realized from two axes, namely granting authority in units of individuals such as the creator (the artist) or the owner of the artwork, and granting authority in units of functions such as ownership transfer.

Furthermore, envisaging situations where an agent other than the owner of the artwork performs listing management, a multisignature function is also provided, by which processing is not executed without grant of access rights to a plurality of people and approval of both the creator (the artist) and the owner of the artwork.

The meta-transaction function by which the platform can pay the GAS fee on behalf of the user was described above. However, there are several items to be aware of when using meta-transactions. Security risks related to meta-transactions have been extracted from a list of SWC (Smart Contract Weakness Classification and Test Cases) summarizing the possible vulnerabilities of smart contracts, and countermeasures to these problems have been implemented on the BCN.

For example, there is a risk that a malicious user may generate and use a valid unused signature by partially modifying a signature to be used as an argument. To avoid this, the BCN is designed so that an electronic signature is not included in the argument of the hash function used to generate a signature (SWC 117). Further, in relation thereto, the BCN is designed so that data mapping is performed on-chain, thereby preventing the same signature from being used (SWC 121). Furthermore, when receiving an electronic signature from off-chain, a method for reliably restoring the address of the signer is employed by using a restoration method conforming to elliptic curve cryptography (SWC 122).

To access the BCN, the user requires a private key linked to his/her own EOA address. However, managing this key is extremely important. As methods therefor, the users manage their own keys, or the BCN takes custody of and manages the keys of the users, or a third party key management company (a custody company) is entrusted with key management. Using the custody service of a custody company specializing in key management minimizes the risk of key loss. On the other hand, the expected usability of the BCN may be sacrificed. Since this depends on the technical progress and service updates of the custody company, at present, BCN may perform key management for keys not having Ether, and the user him/herself performs key management in a wallet.

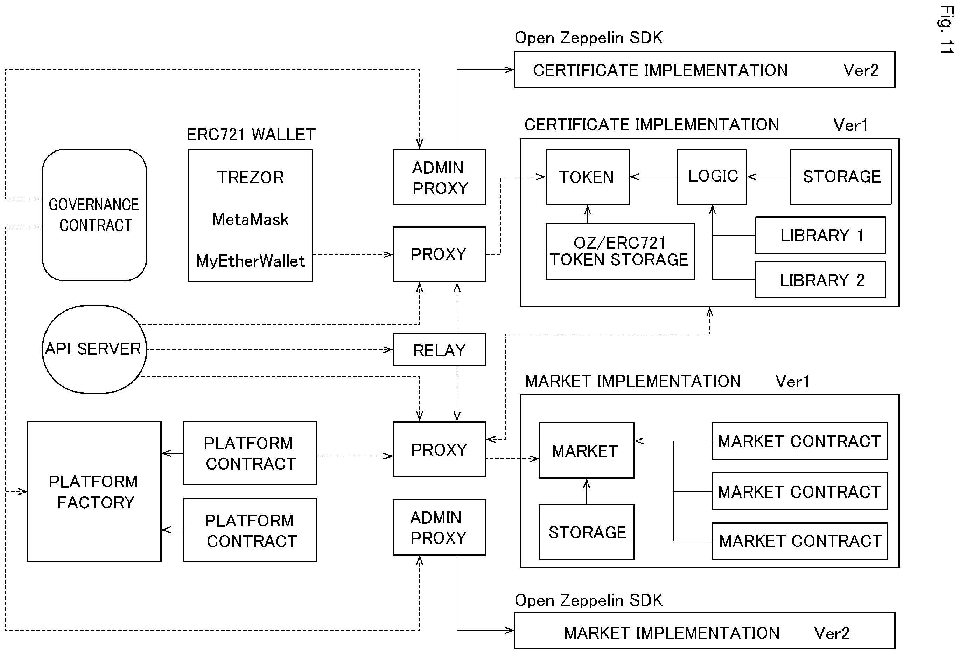

Fig. 11 is a view showing an example of the architecture of the BCN smart contract.

A relay is the endpoint when executing a meta-transaction as a substitute transaction. First, the Ethereum address (EOA address) of the signer is restored from the signature assigned as the argument and the original hash data, and the restored address is reassigned as the argument.

Next, the proxy contracts linked to the token or the market contract are accessed. After confirming that msg.sender corresponds to the relay contract within the call destination contract, the EOA address assigned as the argument is validated as being suitable as the authority set for each individual mathematical function.

The proxy is the endpoint of the relay contract following execution of the meta-transaction and the wallet that manages the private key, or from read-only access. By executing delegate_call so as to execute an external contract function with reference to the internal storage area of the proxy contract while simultaneously forwarding data to the external contract, the proxy also serves as storage for storing data. This is the cornerstone of an upgradeable design as a nonrenewable contract that provides a fixed address and permanent storage.

Tokens implement ERC721 contracts provided by OpenZeppelin, which allows access to mathematical functions having token issuing and transferring functions that are based on the standards of standard ERC721. Further, by overriding each mathematical function, unique restrictions and functions are added. Information relating to artworks not directly related to tokens is stored as a key-value data structure. Another feature is that since data are essentially stored in the data storage of the proxy by OpenZeppelin-SDK, an upgradeable contract is realized.

Logic provides mathematical functions used as functions for storing related artwork metadata or history data that are not related to the ERC721 token information. The logic is inherited from the token and inherits a storage contract, and by using delegate_call from the proxy contract, data are stored in a data format defined in advance with respect to the proxy storage. The logic is configured to be upgradable in a similar manner to the token and can respond to specification modification requests and the like.

In the storage, a shared data format from a plurality of contracts can be used by defining a multidimensional data format in advance. Thus, the BCN certificate can include element information and constraint condition information.

A library provides data storage and codes for executing calculation processing and so on. By separating the library from the logic contract, the total amount of code on the token contract, and accordingly the total amount of GAS, can be reduced, and as a result, more functions can be packaged into a single contract.

Adminproxy manages contract addresses that are authorized to update or change a group of contracts packaged as an implement. Governance contract addresses can also be registered.

The market deploys a market contract representing a one-to-one relationship with a single handler. Simultaneously, the market maps the deployed contract address and information belonging to the market (the manager EOA address of the handler, the handler name, and so on, for example) and stores the result in the storage. There are two reasons for mapping elements using contract addresses. The first is to limit transactions and record the history with reference to the information recorded on the market when a certificate is transferred. The second is to achieve compatibility with the argument to (the transfer destination address of the token) of the address data used by the transferForm function that inherits OpenZeppelin ERC721. Further, by using OpenZeppelin-SDK, similarly to the content described in the token contract section, it is possible to modify only the content of the market contract while using the same storage.

A market contract is a contract deployed from a market contract. As described above, since the objective is to map the contract address with the various market information on the market contract, the market contract is provided with only the minimum required functions.

In a platform factory, by acquiring verification through governance, it is possible to deploy the platform contract corresponding to the platform on a one-to-one basis. The generated contract address and the EOA of the platform owner can be mapped as verified and then stored and viewed. As a result, authority to create market contracts is limited only to verified platforms. Alternatively, a function for preventing malicious users from participating by determining whether or not a generated market contract is verified or the like can be provided.

A platform contract is a contract generated through the platform factory. The platform contract serves to identify the platform and the owner thereof.

A governance contract is a contract that issues tokens. The governance contract grants token holders voting rights relating to contract updating, the right to veto malicious transactions, and so on in accordance with the protocols of the operator of the BCN according to this embodiment.

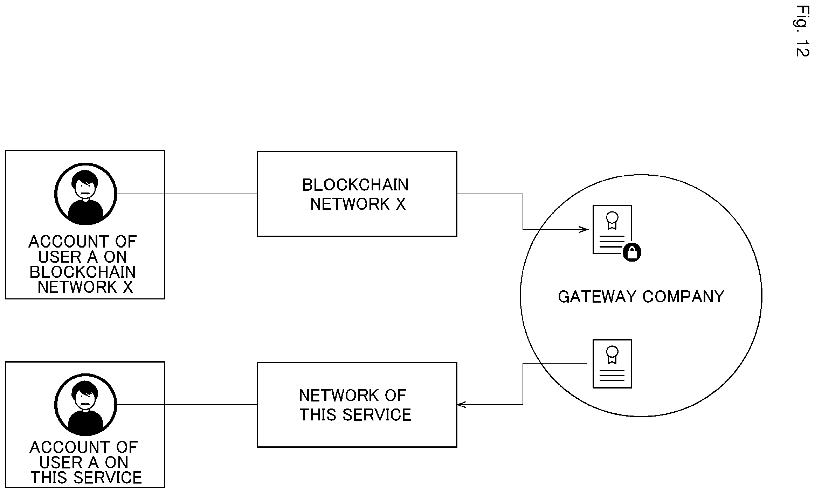

Fig. 12 is a view showing an example of a mechanism for realizing interoperability using a two-way peg (bidirectional communication). In order to realize interoperability with other art blockchain projects in the BCN, models that provide a method by which value can enter and exit the network, such as a gateway in XRP Ledger, are used as a design reference.

This method is a method for fixing (locking) a certificate in the project prior to transfer when a token (here, the BCN certificate) crosses between blockchains. At this time, the certificate is issued anew in the transfer destination project. For example, when a certificate is transferred from the BCN to a project created on another blockchain, the same certificate is locked on the BCN and the certificate is issued anew in the transfer destination project. When a certificate is to be returned to the original BCN, meanwhile, the lock thereon is released so that the certificate is redistributed. This system is generally known as a "two-way peg".

This method is made possible by gateway companies that manage the movement of tokens between two blockchains. The BCN can be connected to other, different blockchain projects by token locking and unlocking performed by the gateway company.

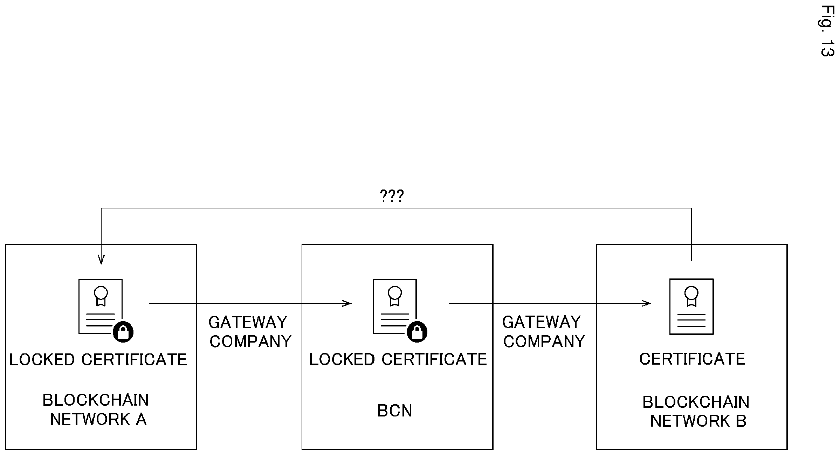

Fig. 13 is a view showing a token circulation problem. Connecting other networks about the BCN using a gateway company allows seamless certificate movement across different blockchains. However, when a token is moved without passing through the BCN, a problem occurs in that the token circulates through a plurality of networks. Accordingly, a case in which a certificate issued by a certain network is transferred successively to the BCN and then to a different network through the gateway company may be envisaged. Circulation is a phenomenon whereby, at this time, the pre-transfer network and the post-transfer network are connected by a gateway company so that a certificate is circulated back to the network that originally issued the certificate.

**To** prevent this, information indicating the platform from which the token comes is recorded on the token. Then, when the token moves to another network through the BCN, a request must be issued to the network that originally issued the token to delete the locked token.

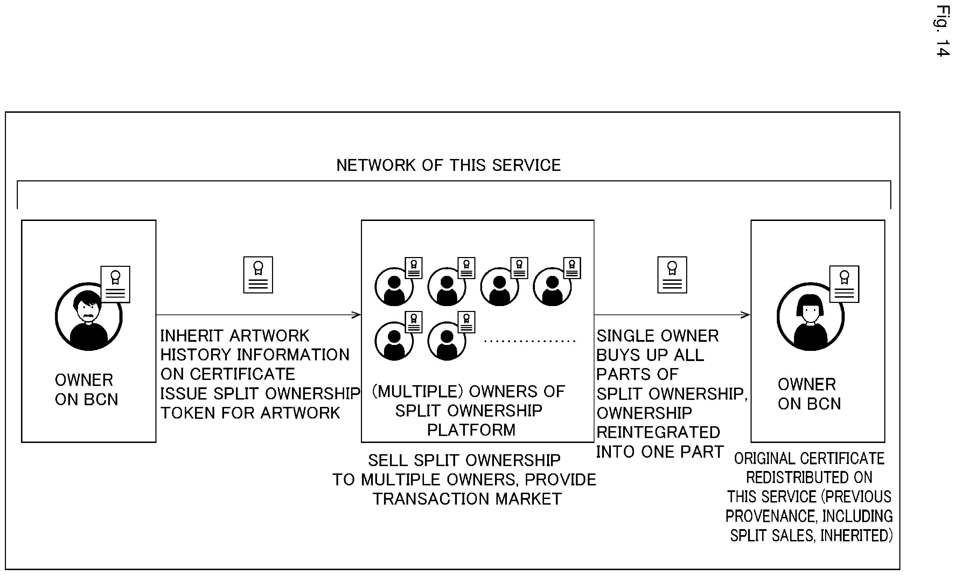

Fig. 14 is a view showing an example of cooperation with a fractional ownership project. Here, an example in which cooperation is performed with a project for realizing fractional ownership of an artwork will be introduced as an example of cooperation with a project that uses the BCN history.

Platforms that enable users to sell and trade ownership of artwork after splitting the ownership so that more people are given the opportunity to purchase and invest in artworks are starting to appear.

By issuing split ownership tokens by referring to the history information on the BCN, users can purchase split tokens with confidence after checking the history information on the BCN. Moreover, BCN users can be provided with a wide range of choices and more rapid liquidity.

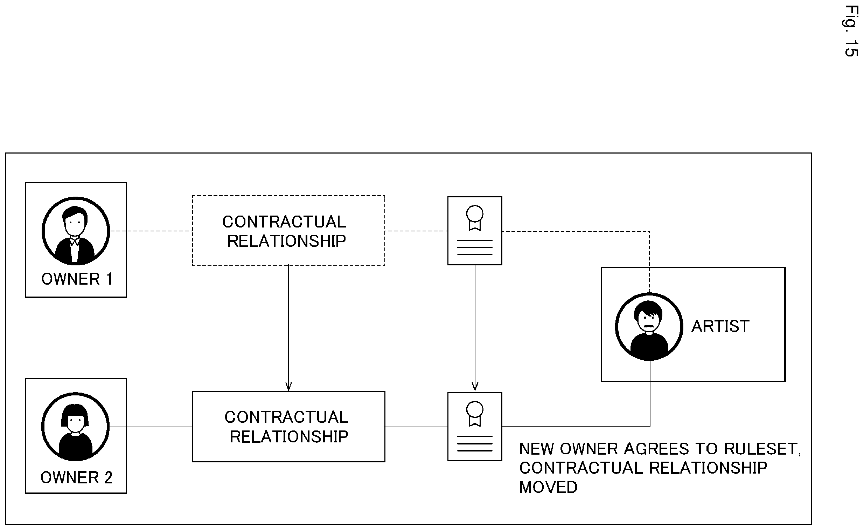

Fig. 15 is a view showing an example of the transfer of a contractual relationship when transferring a BCN certificate. BCN certificates on the BCN are configured such that the terms of the contract agreement between the creator (the artist) and the owner are carried over to the next contract together with the BCN certificate. When a new owner purchases the artwork or the like, the contractual relationship is transferred after agreeing to the artwork ruleset set in advance by the creator (the artist). As a result, the contract between the creator (the artist) and the former owner ends, and a contract is established between the creator (the artist) and the new owner.

**A** case in which copyright and use rights are transferred together with the transfer of ownership as a set and a contract that specifies licensing alone without ownership can both be envisaged.

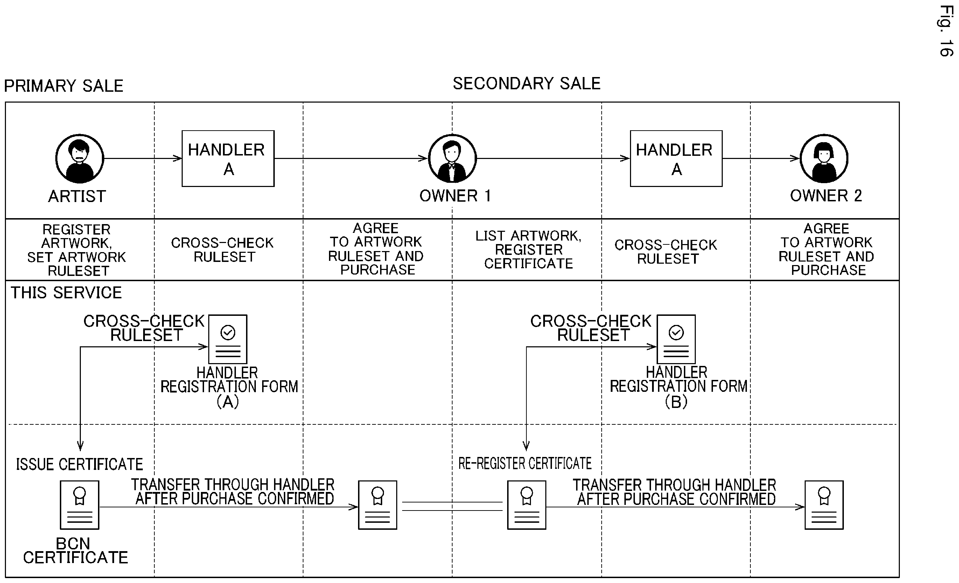

Fig. 16 is a view showing an overall image of BCN services, including examples of primary and secondary sales schemes. Fig. 16 is a view showing a different example to that of Fig. 8. More specifically, Fig. 16 shows a sales flow in a case where primary and secondary sales services are used on the BCN according to this embodiment.

In step 1, the creator (the artist) registers the artwork, lists the artwork on the trading service (the handler), and sets (C) the artwork ruleset information. A BCN certificate is then issued on the BCN. In this flow, the creator (the artist) registers the artwork on the BCN through a service (a handler A) connected to the BCN.

In step 2, owner 1 serving as the buyer agrees to the artwork ruleset and buys the artwork. The buyer (owner 1) then pays the cost of the artwork to the trading service (the handler). The BCN certificate is then temporarily moved from the account of the creator (the artist) on the BCN to the account of the trading service (the handler). Then, either the creator (the artist) or the trading service ships the artwork to the buyer. The buyer (owner 1) then confirms receiving the artwork, whereupon the BCN certificate is transferred from the account of the trading service (the handler) to the account of the buyer and a record of the sale on the trading service (the handler) is added to the provenance on the BCN certificate (registering the price of the sale is not essential, but the sale price can be registered as reference information with restricted viewing). The trading service then pays the sale price to the creator. In this flow, the buyer (the owner) buys the artwork after agreeing to the artwork ruleset. In other words, this is a primary sales flow.

In step 3, owner 1 lists the artwork on the trading service as a seller. At this time, the artwork ruleset of the artwork is cross-checked with the ruleset (the handler ruleset) of the trading service (the handler). If no problems arise, listing of the artwork is accepted. Then, owner 2 serving as the buyer agrees to the artwork ruleset of the artwork and buys the artwork. The buyer (owner 2) then pays the cost of the artwork to the trading service. The BCN certificate is then temporarily moved from the account of the creator on the BCN to the account of the trading service. Then, either the seller (owner 2) or the trading service ships the artwork to the buyer. The buyer (owner 2) then confirms receiving the artwork, whereupon the BCN certificate is transferred from the account of the trading service (the handler) to the account of the buyer and a record of the sale on the trading service (the handler) is added to the provenance on the BCN certificate (registering the price of the sale is not essential, but the sale price can be registered as reference information with restricted viewing). The trading service (the handler) then pays the sale price to the seller (owner 1). In this flow, the artwork is sold to another owner in a secondary sale.

In step 4, the owner of the artwork has the artwork registered (stored, insured, appraised, exhibited, or the like) with an art-related service connected to the BCN service (without transferring ownership). The artwork ruleset of the artwork is then cross-checked with the ruleset of the service (the handler ruleset). If no problems arise, registration of the artwork is accepted. The handler (the service provider) then adds history to the BCN certificate in accordance with the content of the provided service.

The storage implementer, the storage period, the storage location, and detailed information such as storage conditions can be registered in the storage history as attached information (the attached information can also be published privately so as to restrict viewing).

The insurance provider, the insurance period, insurance conditions, and so on can be registered in the insurance history as attached information (the attached information can also be published privately so as to restrict viewing).

The appraiser, the appraisal date, and the content of the appraisal can also be registered in the storage history as attached content (the attached information can also be published privately so as to restrict viewing).

The exhibition location, the exhibition period, and other detailed information relating to exhibition can be registered in the exhibition history as attached information (the attached information can also be published privately so as to restrict viewing).

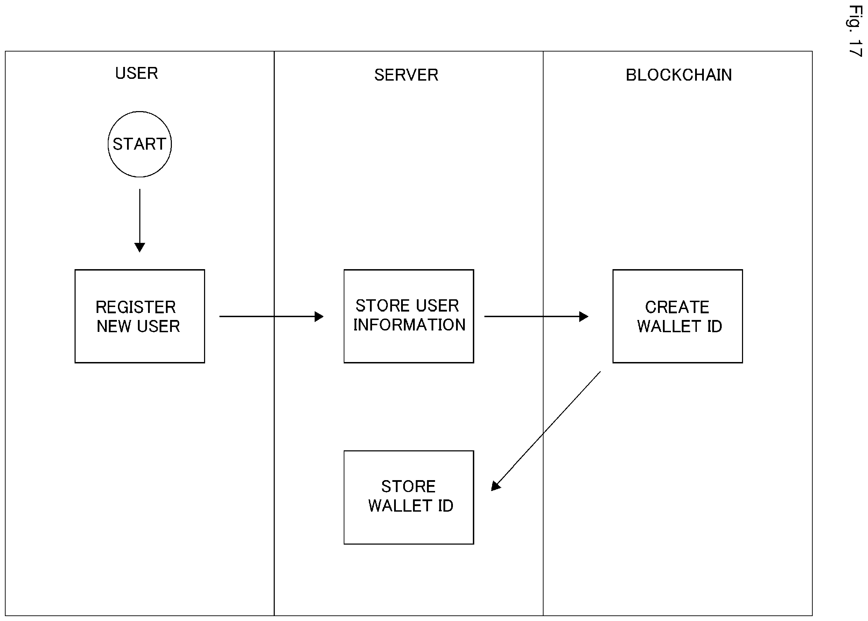

Fig. 17 is a view relating to a BCN certificate storage wallet creation ID. The wallet ID is synonymous with the user ID (when Ethereum is used, the Ethereum address) on the BCN.

First, if the user is not an existing user, the user must start new user registration. When predetermined information is registered by the new user, the user information is stored in the server.

Next, a wallet ID is newly created for the new user using blockchain technology on the BCN. The wallet ID is then stored in the server.

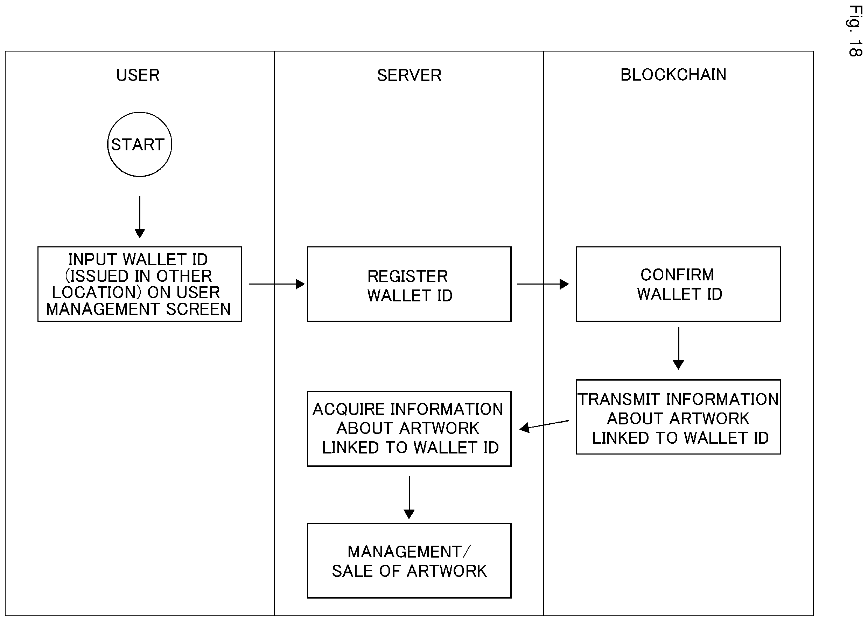

Fig. 18 is a view relating to call-up of the BCN certificate storage wallet by a service of another company. In the case of a user who has a wallet ID on a service of another company rather than the BCN, first, the user inputs the wallet ID issued by the other company on a user management screen on the BCN. Once the input wallet ID has been input, the wallet ID is registered in the server.

Next, the registered wallet ID is confirmed on the BCN. At this time, the artwork information linked to the wallet ID is transmitted to the server.

The server, having acquired the artwork information linked to the wallet ID, can use the acquired information in artwork management, sales, and so on.

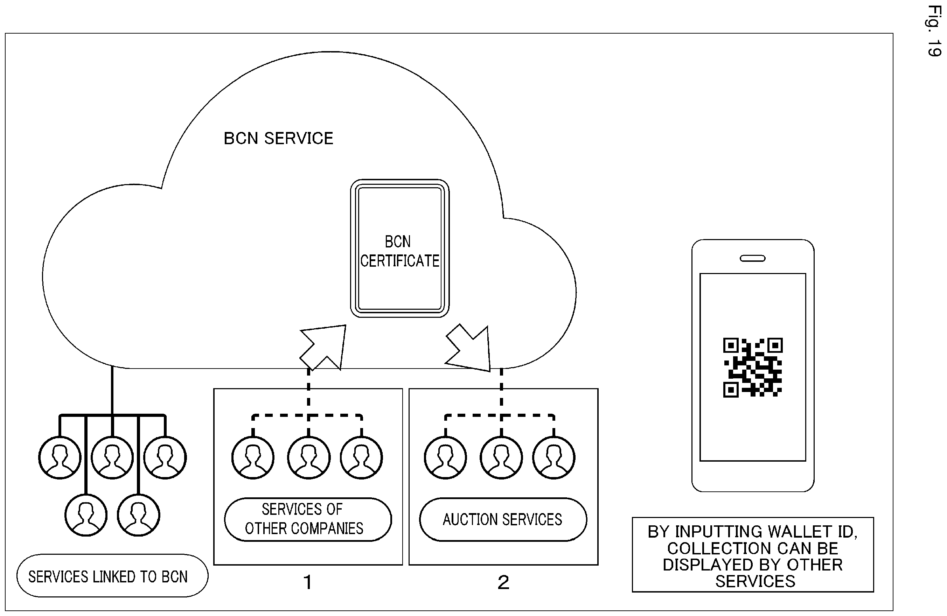

Fig. 19 is a view relating to infrastructure for various services. In the figure, the "services cooperating with the BCN" represent examples of services that function in conjunction with the BCN. The user, having inputted his/her wallet ID, can use the BCN certificate from any artwork-related service that cooperates with the BCN. Artwork-related services that can cooperate with the BCN include auction houses, creator social media, framed digital art subscriptions, appraisal services, insurance services, collection archiving services, pawn shop services, EC services, certificate issuing services, and so on. These services also include services operated by different operators to the operator of the BCN.

In this case, the user can also use the BCN certificate in order to use a different auction service not hosted by the BCN.

Note that the user can connect securely to the blockchain through an ASP (application service provider) system of the BCN. In this case, functions incorporated into the ASP system of the BCN mainly include certificate management and certificate issuance.

Certificate management provides initial setting (service name registration and so on) of a certificate, price setting of a certificate, sales management, and a management screen.

Certificate issuance provides a user interface for certificate issuance, certificate ID issuance, import/export of the certificate ID, information management for the artwork linked to the certificate, and an interface for displaying the history of the certificate.

As other functions, functions relating to common terms and conditions and consent and language-related functions such as support for Japanese and English are provided.

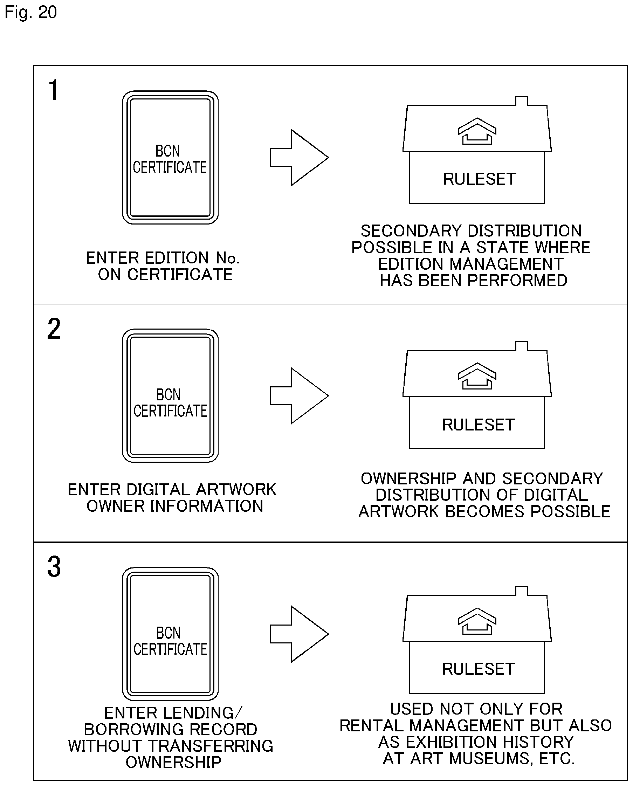

Fig. 20 is a view relating to businesses envisaged by the BCN certificate. Example 1 is sales management for a limited-edition artwork. More specifically, to prove that a certain artwork is an editioned work, the edition number can be entered on the BCN certificate. By entering the edition number into the artwork ruleset information, it becomes possible to carry out secondary distribution of the artwork using the information about the artwork for which edition management has been performed.

Photographic artworks, video artworks, and so on can easily be duplicated, and therefore edition management is an essential element of artwork management. Reproductions with a limited number of editions can also be managed using the BCN certificate.

Example 2 is sales management of a digital artwork. More specifically, to prove the owner of the digital artwork, owner information can be entered on the BCN certificate. By entering the owner of the digital artwork into the artwork ruleset information, the owner of the artwork can be clarified, thereby enabling secondary distribution based on the approval of the owner of the artwork or transfer to a new owner.

Conventionally, digital artworks can be duplicated easily, and therefore, although the potential thereof is acknowledged, it has so far been difficult to distribute digital artworks as assets. By using the BCN certificate, a unique ID can be assigned to such easily duplicable artworks, making sales management thereof possible.

Example 3 is rental management of an artwork. More specifically, a record of lending/borrowing (rental) of an artwork can be entered on the BCN certificate without transferring ownership of the artwork. As well as rental management by recording lending/borrowing of the artwork and so on, the exhibition history at art museums and the like can also be entered into the artwork ruleset information.

Using the BCN certificate, it is possible to manage artwork rental business. As well as the regular rental of artworks, it is also possible to manage the rental of digital artworks and the lending/borrowing of artworks between art museums. In certain cases, this can also be connected to provenance management for increasing the value of an artwork.

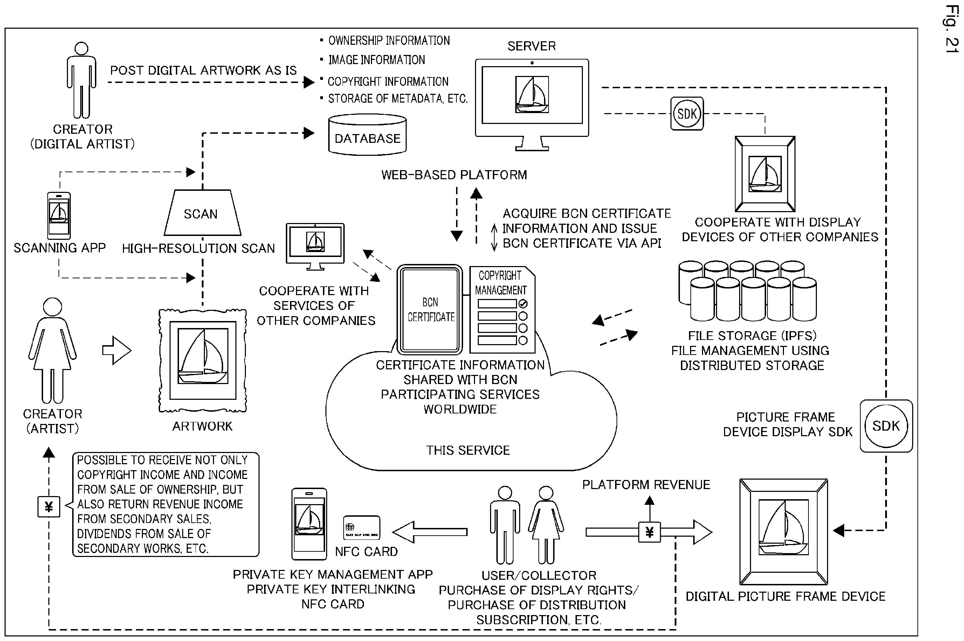

Fig. 21 is a view showing a system configuration of a system for displaying digital art in conjunction with ownership/browsing authority information on the BCN. The creator (the artist) scans or photographs an artwork (the real artwork) and stores the digital data in a database of the server. Further, the creator (the digital artist) posts the digital artwork as is and stores the artwork in the database of the server. Further, an agent or another handler (a copyright managing business operator or the like) can store the artwork information in a similar manner instead of the creator.

The creator (the artist or the digital artist) described above can also store ownership information, image information, copyright information, metadata, and so on in addition to the digital data. At this time, the creator can acquire BCN certificate information and issue a BCN certificate through an API. The BCN certificate information can be shared with services participating in the BCN around the world and can therefore also be linked to the services of other companies. Cooperation between an IPFS (file storage), which is a distributed storage mechanism, and the BCN is also possible. In this case, it is also possible to link to the original image data (not shown).

Further, by using a picture frame device interlinking SDK, which is provided as a part of the BCN services, the server can cooperate with a display device of another company. Meanwhile, a user or a collector can purchase display rights, a distribution subscription, and so on. At this time, the user or the like can manage a digital artworks that s/he owns by using a private key management application or a private key interlinking NFC card.

Through this purchase, the provider of the BCN service can earn platform revenue. Further, the creator can receive copyright income, income from the sale of ownership, return revenue income from secondary sales, dividends from the sale of a secondary work, and so on.

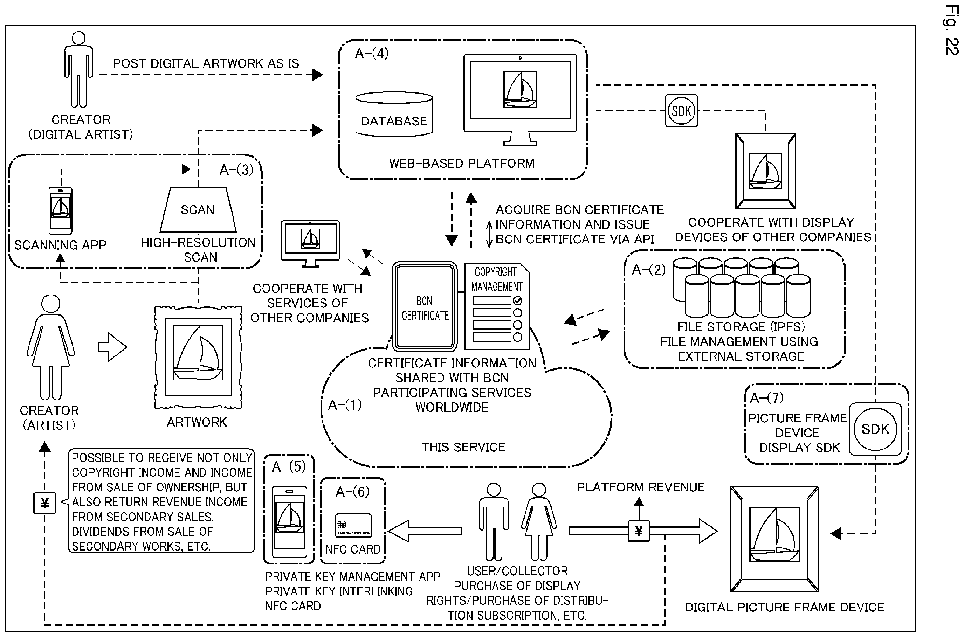

Fig. 22 is a view showing a different system configuration to that of Fig. 21. This system will be described below.
A-(1) is a profit-sharing function for managing the rights relationship of a creation and distributing profit among primary to n-th order creators, primary to n-th order sellers, and primary to n-th order sales agents.
A-(2) denotes distributed storage (IPFS or the like) for managing both artwork certificates and the large-volume artwork data of digital artworks on the BCN.
A-(3) is an application for scanning a dormant artwork in 2D or 3D so as to generate digital data, and registering the digital data on a blockchain.
A-(4) is a web platform for distributing the digital content connected to the BCN. The web platform can be used to register digital artworks, issue blockchain certificates, distribute content to devices, and purchase certified digital artworks.
A-(5) is a smartphone wallet used by the user to manage the private key of his/her own account on the BCN. The smartphone wallet has functions for registering and buying artworks and approving changes to the copyright terms and conditions in cooperation with the web platform of A-(3).
A-(6) is an NFC card storing an artwork certificate access key that cooperates with the BCN to enable the exchange, including the physical exchange, of blockchain certificates for digital artworks. The NFC card also makes it possible to handle face-to-face sales scenes such as sales at exhibitions.
A-(7) is an SDK for viewing artworks on a digital picture frame device in conjunction with the ownership and the copyright license on the BCN.

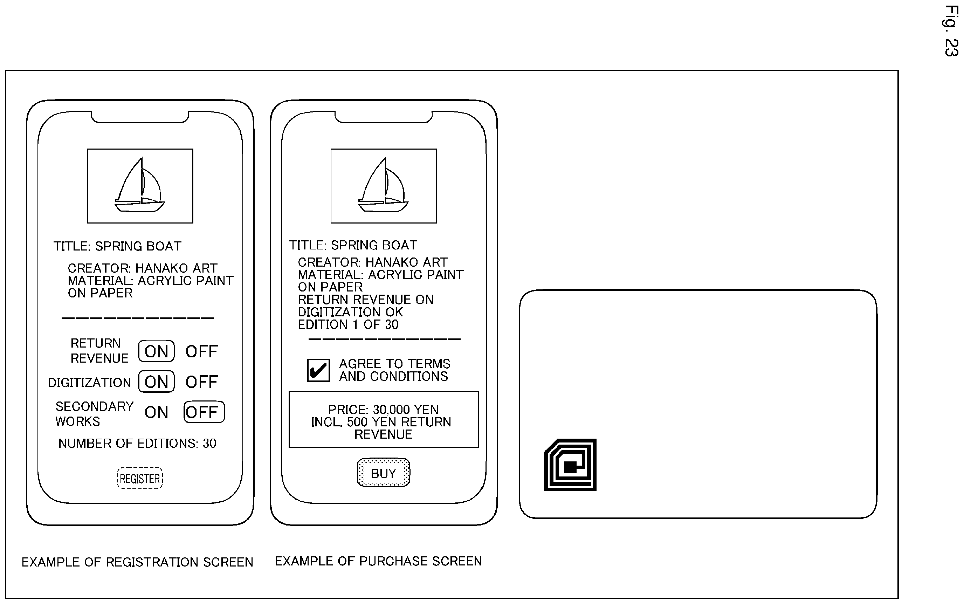

Fig. 23 is a view relating to a smartphone application and an NFC card. The functions of the smartphone application (web application) will be listed below.

The blockchain account of the user can be managed (including private key management).

The display device and the account of the user can be linked.

Digital content subscription contracts can be managed (including application and suspension).

Limited-edition digital content can be purchased and managed.

A verification function is provided for proving that an artwork is held in the account of the user when digital content held by the user is listed on the Internet for secondary sale.

A function is provided for deleting display data from the display devices connected to the account at the same time as limited-edition digital content is listed for secondary sale.

The terms and conditions connected to the artwork can be checked and agreed to, and changes thereto can be proposed.

A function for exchanging messages with the creator is provided.

The NFC card will now be described. An NFC card is an IC card with inbuilt NFC. The NFC card stores a private key linked to an artwork certificate on the blockchain. The NFC card corresponds to an NFC reader provided in a smartphone application, and when the NFC card is brought close to the smartphone in order to read the information thereon, a preset passcode is input. The NFC card is used to respond to requests for physical guarantees and during unavoidable offline transactions.

Note that the design can be changed according to the service.

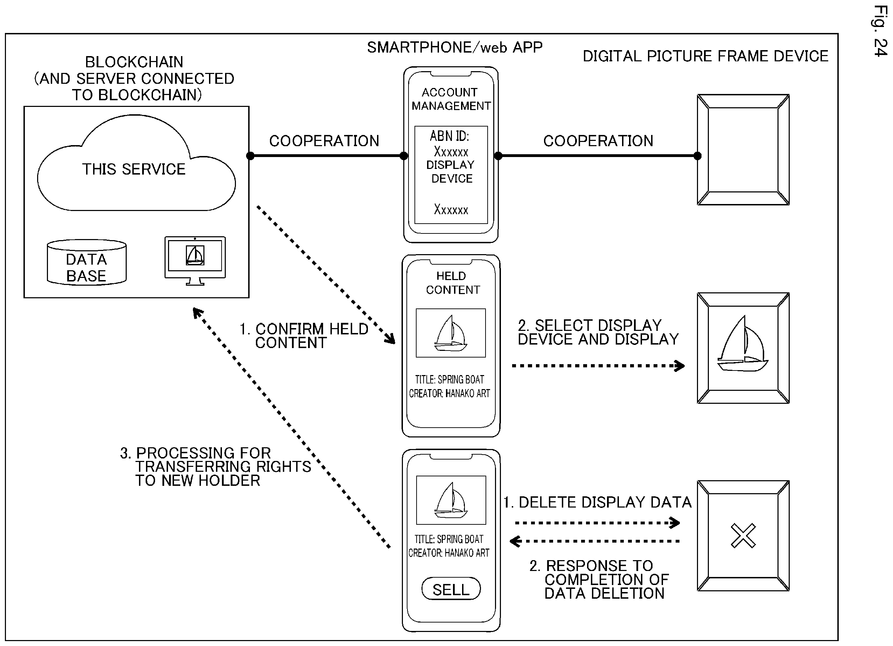

Fig. 24 is a view relating to display control on a device that operates in conjunction with content ownership on the blockchain.

The user can perform account management on a smartphone or a web application. The smartphone or the like cooperates with both the server of the BCN service and a digital picture frame device.

Information about the held content is displayed on the smartphone or the like that cooperates with the BCN service and can therefore be checked. By selecting the display device at this time, a digital picture frame is displayed on the smartphone or the like.

When the selected digital picture frame is displayed on the smartphone or the like, the content ownership can be transferred. More specifically, when a sale button on the display screen of the smartphone or the like is pressed, the display data of the digital picture frame are deleted. A notification indicating that deletion of the display data of the digital picture frame is complete is then transmitted to the smartphone or the like. Following receipt of the notification, processing for transferring rights to the new holder is performed on the BCN.

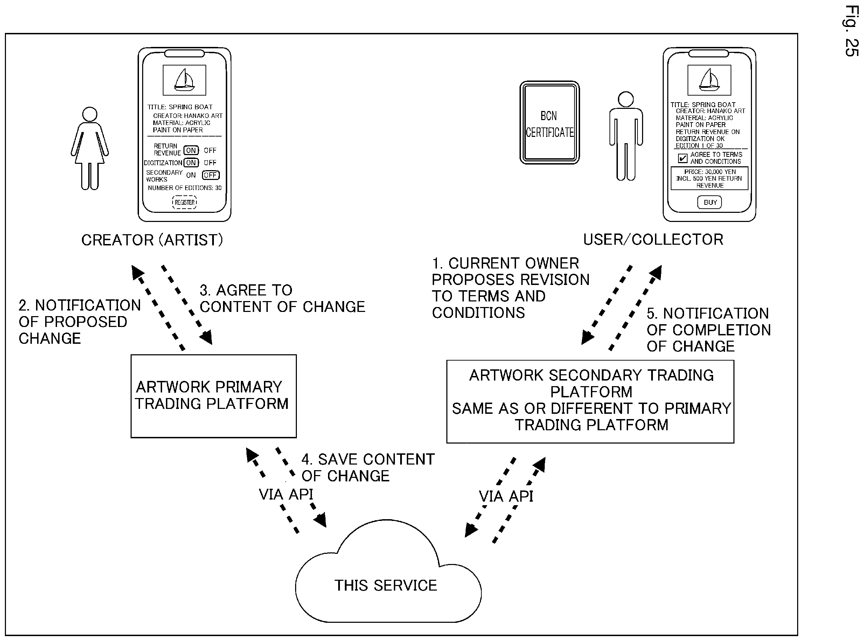

Fig. 25 is a view relating to a scheme for revising the terms and conditions of an artwork. When the user or the collector who holds the BCN certificate is the current owner, revisions to the terms and conditions can be proposed through the display screen of the smartphone or the like. When the user or the like proposes revisions to the terms and conditions, the creator is notified of the (proposal of) revisions or changes to the terms and conditions through the artwork secondary trading platform, the BCN, and the artwork primary trading platform. If the creator does not agree to the notification (the proposal), the creator can either provide notification of his/her disagreement or ignore the proposal.

When the creator agrees to the notification (the proposal), on the other hand, the creator can notify the user or the like of his/her agreement. In this case, as regards the content of the saved changes, the user or the like is notified that the revisions or changes to the terms and conditions are complete through the artwork primary trading platform, the BCN, and the artwork secondary trading platform. Once notification is complete, the user or the like and the creator are both bound by the modified terms and conditions.

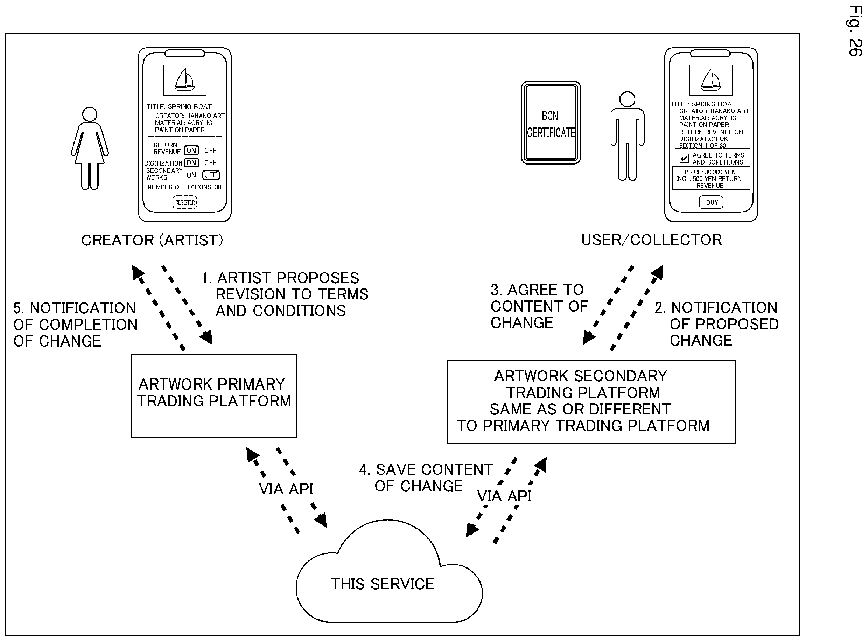

Fig. 26 is a view relating to a different scheme for revising the terms and conditions of an artwork to that of Fig. 25. The creator can propose revisions to the terms and conditions through the display screen of the smartphone or the like. When the creator proposes revisions to the terms and conditions, the user or the like is notified of the (proposal of) revisions or changes to the terms and conditions through the artwork primary trading platform, the BCN, and the artwork secondary trading platform. If the user or the like does not agree to the notification (the proposal), the user or the like can either provide notification of his/her disagreement or ignore the proposal.

When the user or the like agrees to the notification (the proposal), on the other hand, the user or the like can notify the creator of his/her agreement. In this case, as regards the content of the saved changes, the creator is notified that the revisions or changes to the terms and conditions are complete through the artwork secondary trading platform, the BCN, and the artwork primary trading platform. Once notification is complete, the creator and the user or the like are both bound by the modified terms and conditions.

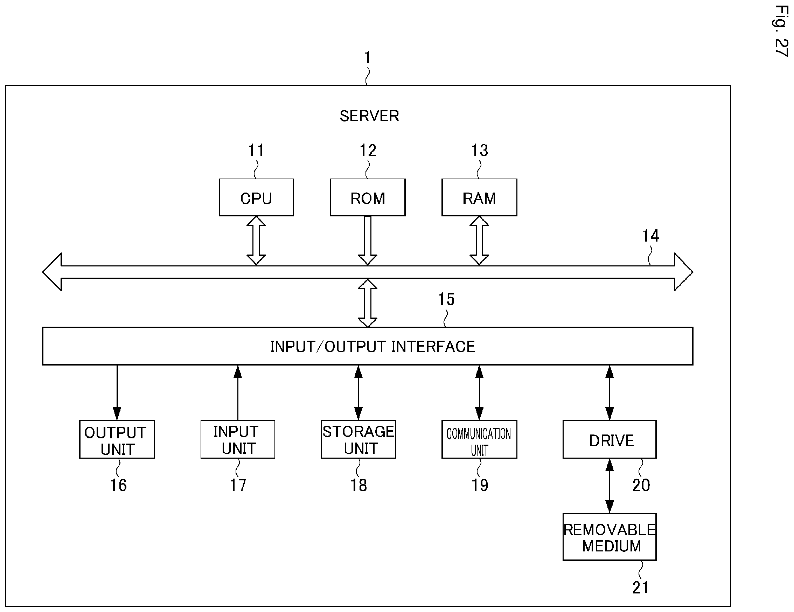

Fig. 27 is a block diagram showing an example of a hardware configuration of the server according to this embodiment of the handing management device of the present invention.

A server 1 includes a CPU (Central Processing Unit) 11, a ROM (Read Only Memory) 12, a RAM (Random Access Memory) 13, a bus 14, an input/output interface 15, an input unit 16, an output unit 17, a storage unit 18, a communication unit 19, and a drive 20.

The CPU 11 executes various processing in accordance with a program recorded in the ROM 12 or a program loaded to the RAM 13 from the storage unit 18.

The RAM 13 stores data required by the CPU 11 to execute various processing and so on as appropriate.

The CPU 11, the ROM 12, and the RAM 13 are connected to each other by the bus 14. The input/output interface 15 is also connected to the bus 14. The input unit 16, the output unit 17, the storage unit 18, the communication unit 19, and the drive 20 are connected to the input/output interface 15.

The input unit 16 is constituted by a keyboard or the like, for example, and outputs various information.

The output unit 17 is constituted by a display such as a liquid crystal display, a speaker, or the like, and outputs various information in the form of images and sound.

The storage unit 18 is constituted by a DRAM (Dynamic Random Access Memory) or the like and stores various data.

The communication unit 19 communicates with other devices through a communication network N, including the Internet.

A removable medium 30 constituted by a magnetic disk, an optical disk, a magneto-optical disk, a semiconductor memory, or the like is attached as appropriate to the drive 20. A program read from the removable medium 30 by the drive 20 is installed in the storage unit 18 as required.

The removable medium 30 is also capable of storing the various data stored in the storage unit 18 in a similar manner to the storage unit 18.

Through cooperation between the various hardware and various software of the server 1 shown in Fig. 27, it is possible to execute the various types of processing described above.

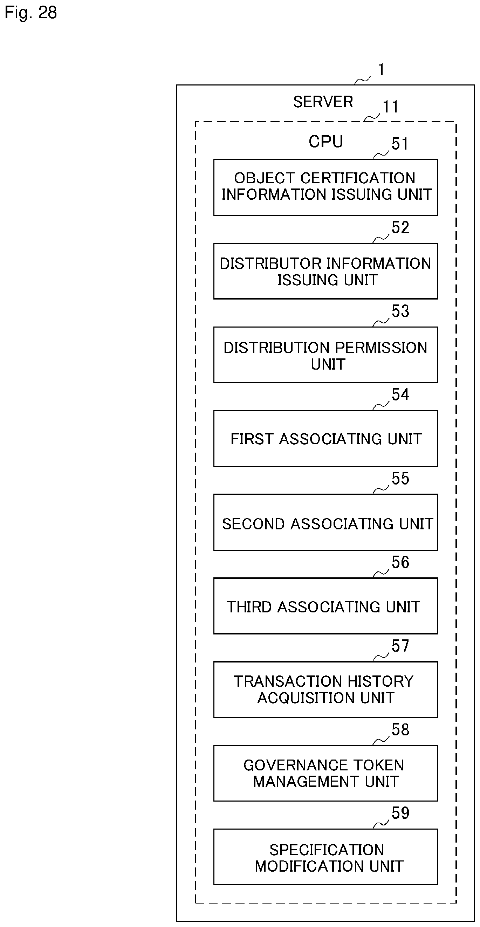

Fig. 28 is a function block diagram showing an example of a functional configuration of the server shown in Fig. 27.

As shown in Fig. 28, an object certification information issuing unit 51, a distributor information issuing unit 52, a distribution permission unit 53, a first associating unit 54, a second associating unit 55, a third associating unit 56, a transaction history acquisition unit 57, a governance token management unit 58, and a specification modification unit 59 function in the CPU 11 of the server 1.

The object certification information issuing unit 51 issues, with respect to an object (an artwork, for example) to be distributed, information relating to certification of the object, including element information relating to elements for increasing the value of the object and constraint condition information relating to a constraint condition applied to distribution of the object, as object certification information.

The distributor information issuing unit 52 issues, with respect to a distributor, distributor certification information relating to certification of the distributor, including provision condition information relating to a provision condition applied to distribution of the object.

The distribution permission unit 53 compares the object certification information with the distributor certification information when the object is to be distributed, and permits distribution after determining that the constraint condition indicated by the constraint condition information matches the provision condition indicated by the provision condition information.

Here, the constraint condition and the provision condition may include conditions used during secondary distribution of the actual object.

Further, the constraint condition and the provision condition may include conditions relating to return revenue.

Furthermore, the constraint condition and the provision condition may include conditions relating to a secondary work derived from the object.

When the object includes a secondary work, the first associating unit 54 associates the secondary work with the original work.

When the object has a plurality of editions, the second associating unit 55 associates each of the plurality of editions with the object.

Here, the constraint condition and the provision condition may include a condition according to which ownership transfer is accompanied by copyright transfer.

Alternatively, the constraint condition and the provision condition may include a condition according to which ownership transfer does not need to be accompanied by copyright transfer.

When the object is transferred from a transaction market managed by a system to which the server 1 is applied to another transaction market that differs from the transaction market, the third associating unit 56 associates identification information identifying the other transaction market with the object.

When the object is transferred from the other transaction market to the transaction market, the transaction history acquisition unit 57 acquires information relating to a transaction history pertaining to the object as transaction history information.

Furthermore, when the object is transferred from the transaction market managed by the system to which the server 1 is applied to a first other transaction market that differs from the transaction market, and is then transferred from the first other transaction market to a second other transaction market that differs from the transaction market and the first other transaction market, and is then transferred to the transaction market from the second other transaction market, the transaction history acquisition unit 57 acquires information relating to the transaction history pertaining to the object as the transaction history information.

The governance token management unit 58 manages a governance token that includes information relating to access to a transaction market managed by the system to which the server 1 is applied by another transaction market, the other transaction market being a different transaction market to the transaction market.

The specification modification unit 59 performs decision-making in relation to specification modifications to the object certification information and/or the distributor certification information in a transaction market managed by the system to which the server 1 is applied.

For example, the specification modification unit 59 can perform the decision-making in relation to the specification modifications on the basis of a result of a veto vote with an adjustable threshold.

An embodiment of the present invention was described above, but the present invention is not limited to the above embodiment, and amendments, improvements, and so on within a scope in which the object of the present invention can be achieved are included in the present invention.

For example, the object to be distributed is not necessarily limited to the examples described above, such as an artwork, and may be any object determined by at least one arbitrary person to have value.

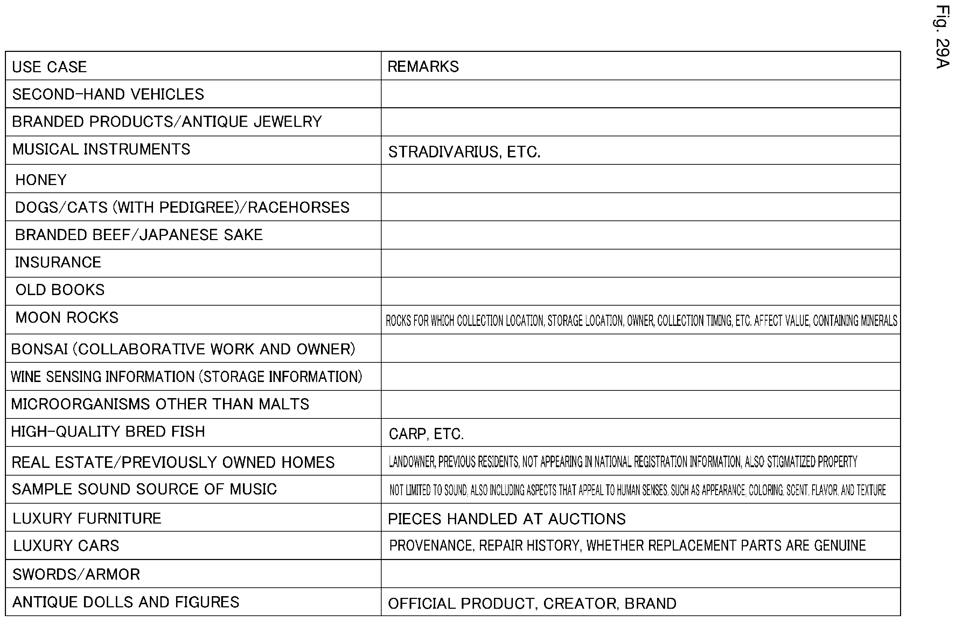

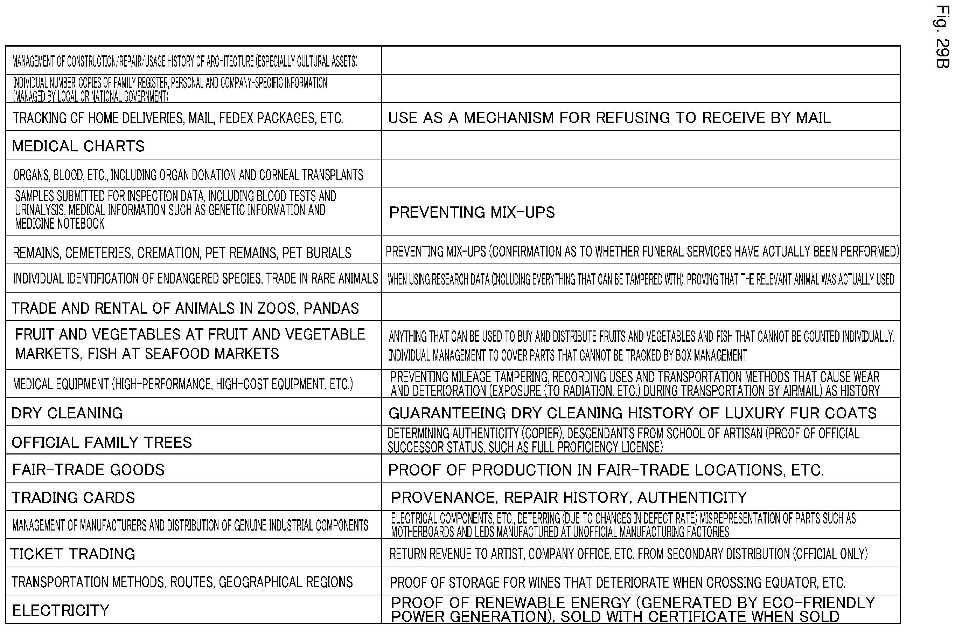

For example, the objects shown respectively as "use cases" in Figs. 29A and 29B can be employed as the object to be distributed.

Note that in the "remarks" in Figs. 29A and 29B, various explanations, such as specific examples and content descriptions, are provided in relation to the object to be distributed specified in the "use case" of the same line.

Further, the system configuration described above and the hardware configuration of the management server 1 shown in Fig. 27 are merely examples for achieving the object of the present invention, and there are no particular limitations thereon.

Furthermore, the function block diagram shown in Fig. 28 is merely an example, and there are no particular limitations thereon. In other words, as long as the system includes functions by which the series of processing described above can be executed as a whole, the function blocks used to realize these functions are not necessarily limited to the example of Fig. 28.

Moreover, the locations of the function blocks are not limited to Fig. 28 and may be set as desired.

Furthermore, one function block may be constituted by a single hardware unit, a single software unit, or a combination thereof.

When the processing of the respective function blocks is executed using software, a program constituting the software is installed in a computer or the like from a network or a recording medium.

The computer may be a computer incorporated into dedicated hardware. Alternatively, the computer may be a computer that is made capable of executing the various functions by installing various programs therein, for example a server or a general-purpose smartphone or personal computer.

The recording medium including the program may be constituted either by a removable medium that is distributed separately to the device body in order to provide the users with the program or by a recording medium or the like that is provided to the users after being incorporated in the device body in advance.

Note that in this specification, the steps describing the program recorded in the recording medium naturally include processing performed in chronological order, but the processing does not necessarily have to be performed in chronological order, and the steps also include processing executed in parallel or individually.

Furthermore, in this specification, the term "system" denotes an overall device constituted by a plurality of devices, a plurality of means, or the like.

### Reference Signs List

- 1: Server
- 11: CPU
- 12: ROM
- 13: RAM
- 14: Bus
- 15: Input/output interface
- 16: Input unit
- 17: Output unit
- 18: Storage unit
- 19: Communication unit
- 20: Drive
- 51: Object certification information issuing unit
- 52: Distributor information issuing unit
- 53: Distribution permission unit
- 54: First associating unit
- 55: Second associating unit
- 56: Third associating unit
- 57: Transaction history acquisition unit
- 58: Governance token management unit
- 59: Specification modification unit

## Claims

1. A handling management device comprising:
object certification information issuing means for issuing, with respect to an object to be distributed, information that relates to certification of the object and includes element information relating to elements for increasing the value of the object and constraint condition information relating to a constraint condition applied to distribution of the object, as object certification information;
handler information issuing means for issuing, with respect to a handler, handler certification information that relates to certification of the handler and includes provision condition information relating to a provision condition applied to handling of the distribution of the object; and
distribution permitting means which, when the object is to be distributed, compares the object certification information with the handler certification information and permits distribution in a case where determination has been made that the constraint condition indicated by the constraint condition information matches the provision condition indicated by the provision condition information.

2. The handling management device according to claim 1, wherein the constraint condition and the provision condition include conditions for secondary distribution of the actual object.

3. The handling management device according to claim 1, wherein the constraint condition and the provision condition include conditions relating to return revenue.

4. The handling management device according to claim 1, wherein the constraint condition and the provision condition include conditions relating to a secondary work derived from the object.

5. The handling management device according to claim 1 or 4, further comprising first associating means which, in a case where the object includes a secondary work, associates the secondary work with the original work.

6. The handling management device according to claim 1, further comprising second associating means which, in a case where the object has a plurality of editions, associates each of the plurality of editions with the object.

7. The handling management device according to claim 1, wherein the constraint condition and the provision condition include a condition according to which ownership transfer is accompanied by copyright transfer.

8. The handling management device according to claim 1, wherein the constraint condition and the provision condition include a condition according to which ownership transfer does not need to be accompanied by copyright transfer.

9. The handling management device according to claim 1, further comprising:
third associating means which, in a case where the object is transferred from a transaction market managed by a system to which the handling management device is applied to another transaction market that differs from the transaction market, associates identification information identifying the other transaction market with the object; and
transaction history acquiring means which, in a case where the object is transferred from the other transaction market to the transaction market, acquires information relating to a transaction history pertaining to the object as transaction history information.

10. The handling management device according to claim 9, wherein, in a case where the object is transferred from the transaction market managed by the system to which the handling management device is applied to a first other transaction market that differs from the transaction market, and is then transferred from the first other transaction market to a second other transaction market that differs from the transaction market and the first other transaction market, and is then transferred to the transaction market from the second other transaction market, the transaction history acquiring means acquires information relating to the transaction history pertaining to the object as the transaction history information.

11. The handling management device according to claim 1, further comprising governance token managing means for managing a governance token that includes information relating to access to a transaction market, managed by a system to which the handling management device is applied, from another transaction market, the other transaction market being a transaction market that differs from the transaction market.

12. The handling management device according to claim 1, further comprising specification modifying means for performing decision-making in relation to specification modifications to at least one of the object certification information and the handler certification information in a transaction market managed by a system to which the handling management device is applied.

13. The handling management device according to claim 12, wherein the specification modifying means performs the decision-making in relation to the specification modifications on the basis of a result of a veto vote with an adjustable threshold.
